# EUROPEAN PATENT APPLICATION

(11) **EP 4 836 351 A1**
(43) Date of publication of application: **04.11.2026**
(21) Application number: 24910276.5
(22) Date of filing: 31.10.2024
(51) Int. Cl.: H04L 9/32

(54) **CERTIFICATE ISSUING METHOD AND SYSTEM, AND BLOCKCHAIN NODE**

(30) Priority: 29.12.2023 CN 202311869952
(71) Applicant: Ant Blockchain Technology (Shanghai) Co., Ltd., Shanghai 200010 (CN)
(72) Inventor: HU, Wenbo, Shanghai 200010 (CN); HUANG, Zucheng, Shanghai 200010 (CN); WANG, Yao, Shanghai 200010 (CN); LIN, Li, Shanghai 200010 (CN); WEI, Changzheng, Shanghai 200010 (CN)
(74) Representative: Fish & Richardson P.C.
(86) International application number: PCT/CN2024/128757
(87) International publication number: WO 2025/139338

(57) **Abstract**

A certificate authority (CA) contract and a signature contract are deployed in a blockchain system. The blockchain system receives a first transaction calling a CA contract, where the first transaction includes a user certificate issuance request; provides a digest of user certificate content corresponding to the user certificate issuance request for the signature contract; and instructs at least t+1 service providers in n service providers to generate a signature. The at least t+1 service providers generate a first signature on the user certificate content; and sends a second transaction calling the signature contract to the blockchain system, where the second transaction includes a contract account of the CA contract and the first signature. The blockchain system returns the first signature to the CA contract based on the second transaction, and issues a user certificate based on the first signature.

## Description

### CROSS-REFERENCE TO RELATED APPLICATIONS

This application is a U.S. National Stage Application under 35 U.S.C. §371 and claims the benefit of PCT Application No. PCT/CN2024/128757, filed on October 31, 2024, which claims priority to Chinese Patent Application No. CN202311869952.2, filed on December 29, 2023, and each application is hereby incorporated by reference in its entirety.

### TECHNICAL FIELD

Implementations of this specification pertain to the field of blockchain technologies, and in particular, relate to certificate issuance methods, systems, and blockchain nodes.

### BACKGROUND

Blockchains (Blockchain) are new application modes of computer technologies such as distributed data storage, peer-to-peer transmission, consensus mechanisms, and encryption algorithms. In blockchain systems, data blocks are connected in a time sequence to be combined into chain data structures, and distributed ledgers that cannot be tampered with or forged are cryptographically ensured. The blockchains are characterized by decentralization, information tamper-resistance, autonomy, etc., and therefore the blockchains have received increasing attention and applications.

In cryptography, public-key cryptography, also referred to as asymmetric cryptography, is cryptography using a pair of public and private keys (public key-private key is denoted as pk-sk, where pk represents "public key", and sk represents "secret key"), and corresponds to cryptography using only one private key. The public-key cryptography includes an encryption algorithm and a digital signature algorithm. A public key-private key cipher pair is a cornerstone of modern cryptography security, and many applications such as a hypertext transfer protocol secure (https) application layer encryption transport protocol and a blockchain are based on pk-sk.

A private key usually represents an identity of a party that owns the private key, can only be held by an owner of the private key, and cannot be disclosed. A corresponding public key can be disclosed. A signature added by using the private key can represent an approval of the owner of the private key for information in a digital world, and signed information can represent a behavior of the owner of the private key in a message of a protocol. Usually, one owner independently has one private key. In this case, the owner can add a signature to a piece of information by using the private key of the owner, and send the signed information to another party. After receiving the signature, a receiver can verify the signature by using a corresponding public key. If verification succeeds, the receiver can confirm that the information is signed by the owner, and the signed information is not tampered with.

A user can obtain a public-private key pair and a CA certificate (i.e., a digital certificate) of a certificate authority (CA), and the CA certificate includes information about a certificate owner, a public key, validity period information, and a signature of the CA authority on the above-mentioned information. A verifier can verify authenticity and integrity of a CA certificate by using a public key of the CA authority, and the CA certificate can prove a matching relationship between an entity identity of an owner and a public key of the CA certificate if the verification succeeds.

### SUMMARY

An objective of this application is to provide certificate issuance methods based on a blockchain system, to issue a CA certificate by using a contract in a blockchain system, thereby ensuring correctness of the CA certificate, and providing a CA certificate system oriented to the blockchain system.

A first aspect of this specification provides a certificate issuance method based on a blockchain system, where a CA contract and a signature contract are deployed in the blockchain system, the CA contract includes a call to the signature contract, a signature public key and information about parameters n and t are stored in association with an account of the CA contract in a contract state of the signature contract, and the signature public key is generated by n service providers by using a distributed key protocol; and the method includes:

The blockchain system receives a first transaction calling the CA contract, where the first transaction includes a user certificate issuance request; provides a digest of user certificate content corresponding to the user certificate issuance request for the signature contract; and instructs, based on the signature contract, at least t+1 service providers in the n service providers to generate a signature corresponding to the signature public key.

The at least t+1 service providers generate a first signature on the user certificate content based on a private key shard corresponding to the signature public key; and send a second transaction calling the signature contract to the blockchain system, where the second transaction includes a contract account of the CA contract and the first signature.

The blockchain system returns the first signature to the CA contract based on the second transaction, and issues a user certificate based on the first signature by executing the CA contract.

A second aspect of this specification provides a certificate issuance method based on a blockchain system, performed by a node in the blockchain system, where a CA contract and a signature contract are deployed in the blockchain system, the CA contract includes a call to the signature contract, a signature public key and information about parameters n and t are stored in association with an account of the CA contract in a contract state of the signature contract, and the signature public key is generated by n service providers by using a distributed key protocol; and the method includes: receiving a first transaction calling the CA contract, where the first transaction includes a user certificate issuance request; providing a digest of user certificate content corresponding to the user certificate issuance request for the signature contract; instructing, based on the signature contract, at least t+1 service providers in the n service providers to generate a first signature on the user certificate content based on a private key shard corresponding to the signature public key; receiving a second transaction calling the signature contract from the at least t+1 service providers, where the second transaction includes a contract account of the CA contract and the first signature; and returning the first signature to the CA contract based on the second transaction, and issuing a user certificate based on the first signature by executing the CA contract.

A third aspect of this specification provides a certificate issuance system, including a blockchain system and multiple service provider devices, where a CA contract and a signature contract are deployed in the blockchain system, the CA contract includes a call to the signature contract, a signature public key and information about parameters n and t are stored in association with an account of the CA contract in a contract state of the signature contract, and the signature public key is generated by n service providers by using a distributed key protocol.

The blockchain system is configured to: receive a first transaction calling the CA contract, where the first transaction includes a user certificate issuance request; provide a digest of user certificate content corresponding to the user certificate issuance request for the signature contract; and instruct, based on the signature contract, service provider devices of at least t+1 service providers in the n service providers to generate a signature corresponding to the signature public key.

The devices of the at least t+1 service providers are configured to generate a first signature on the user certificate content based on a private key shard corresponding to the signature public key; and send a second transaction calling the signature contract to the blockchain system, where the second transaction includes a contract account of the CA contract and the first signature.

The blockchain system is further configured to return the first signature to the CA contract based on the second transaction, and issue a user certificate based on the first signature by executing the CA contract.

A fourth aspect of this specification provides a node of a blockchain system, where a CA contract and a signature contract are deployed in the blockchain system, the CA contract includes a call to the signature contract, a signature public key and information about parameters n and t are stored in association with an account of the CA contract in a contract state of the signature contract, and the signature public key is generated by n service providers by using a distributed key protocol; and the node includes: a receiving unit, configured to receive a first transaction calling the CA contract, where the first transaction includes a user certificate issuance request; a providing unit, configured to provide a digest of user certificate content corresponding to the user certificate issuance request for the signature contract; a signature unit, configured to instruct, based on the signature contract, at least t+1 service providers in the n service providers to generate a first signature on the user certificate content based on a private key shard corresponding to the signature public key, where the receiving unit is further configured to receive a second transaction calling the signature contract from the at least t+1 service providers, where the second transaction includes a contract account of the CA contract and the first signature; and an issuance unit, configured to return the first signature to the CA contract based on the second transaction, and issue a user certificate based on the first signature by executing the CA contract.

A fifth aspect of this specification provides a computer-readable storage medium, on which a computer program is stored, and when the computer program is executed in a computer, the computer executes the method according to the first aspect.

A sixth aspect of this specification provides a blockchain node, including a memory and a processor, where the memory stores executable code, and when executing the executable code, the processor implements the method according to the first aspect.

In the solutions provided in implementations of this specification, a CA contract in a blockchain system calls a distributed (threshold) signature technology-based signature contract to generate a certificate signature of a CA certificate, the entire process does not involve a complete private key, and a degree of private key shard leakage and loss can be tolerated, so that security risks caused by improper private key management can be effectively alleviated; a CA contract-based decentralized management model improves a certificate operation threshold, reduces misoperation risks, and effectively alleviates certificate misissuance; and the blockchain system makes a certificate lifecycle management process transparent, effectively alleviating indiscriminate certificate issuance. In addition, a certificate effective time is determined based on a current block by using the CA contract, providing consistency in the blockchain system.

### BRIEF DESCRIPTION OF DRAWINGS

To describe the technical solutions in implementations of this specification more clearly, the following briefly describes the accompanying drawings required for describing the implementations. Clearly, the accompanying drawings in the following descriptions show merely some implementations described in this specification, and a person of ordinary skill in the art can still derive other drawings from these accompanying drawings without creative efforts.
FIG. 1 is a diagram illustrating a system architecture, according to an implementation of this specification;
FIG. 2 is a flowchart illustrating a key generation phase in a threshold signature implementation method, according to an implementation of this specification;
FIG. 3 is a flowchart illustrating a preprocessing phase in distributed threshold signing, according to an implementation of this specification;
FIG. 4 is a flowchart illustrating a signing phase in distributed threshold signing, according to an implementation of this specification;
FIG. 5 is a flowchart illustrating a preprocessing phase in distributed threshold signing, according to another implementation of this specification;
FIG. 6 is a flowchart illustrating a signing phase in distributed threshold signing, according to another implementation of this specification;
FIG. 7 is a flowchart illustrating a method for deploying a CA contract, according to an implementation of this specification;
FIG. 8 is a flowchart illustrating a certificate issuance method, according to an implementation of this specification; and
FIG. 9 is a diagram illustrating an architecture of a node in a blockchain system, according to an implementation of this specification.

### DESCRIPTION OF IMPLEMENTATIONS

To make a person skilled in the art better understand the technical solutions in this specification, the following clearly and comprehensively describes the technical solutions in the implementations of this specification with reference to the accompanying drawings in the implementations of this specification. Clearly, the described implementations are merely some but not all of the implementations of this specification. All other implementations obtained by a person of ordinary skill in the art based on the implementations of this specification without creative efforts shall fall within the protection scope of this specification.

In the existing technology, because a CA authority is a centralized authority, the CA authority has risks, and these risks include: the CA authority may maliciously issue a false certificate; the CA authority may misoperate and incorrectly issue certificates with the same number; the CA authority may mismanage a private key and leak the private key, etc.

In addition, the CA authority performs lifecycle management on a CA certificate based on a natural time, which is contradictory to consistency in a blockchain system. For example, when a new node is added to the blockchain system, the newly added node needs to retrieve a block that has been executed from another node, and re-execute transactions in these blocks. If a lifecycle of a key of an account in the blockchain system corresponds to the natural time, when a transaction in a previous block is re-executed, the newly added node cannot verify the previous transaction if the key of the account is currently invalid, making a status of the newly added node inconsistent with that of another node.

Therefore, a CA certificate system for a blockchain system is needed, to bind a CA certificate to an on-chain time to provide certainty and validity of the CA certificate in the blockchain system.

Therefore, in implementations of this specification, a CA contract in a blockchain system calls a distributed (threshold) signature technology-based signature contract to generate a certificate signature of a CA certificate, the entire process does not involve a complete private key, and a degree of private key shard leakage and loss can be tolerated, so that security risks caused by improper private key management can be effectively alleviated; a CA contract-based decentralized management model improves a certificate operation threshold, reduces misoperation risks, and effectively alleviates certificate misissuance; and the blockchain system makes a certificate lifecycle management process transparent, effectively alleviating indiscriminate certificate issuance. In addition, a certificate effective time (e.g., a block timestamp) is determined based on a current block by using the CA contract. As such, even if a transaction of a previous block is re-executed, an account key of the transaction remains consistently valid when the block is executed, providing consistency in the blockchain system.

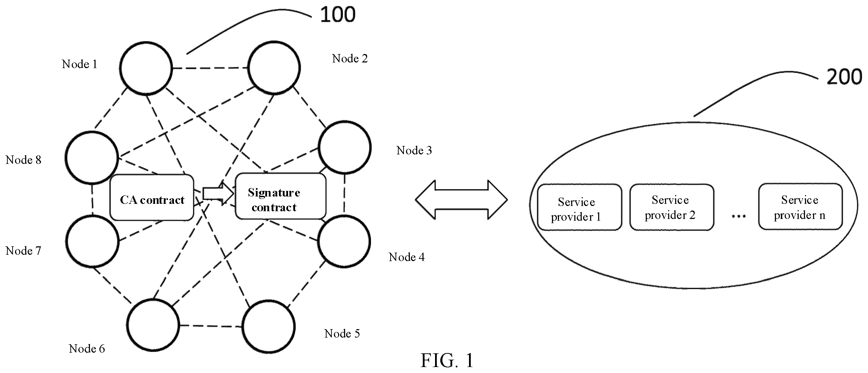

FIG. 1 is a diagram illustrating a system architecture, according to an implementation of this specification. The system includes a blockchain system 100 and an off-chain service system 200.

As shown in FIG. 1, the blockchain system 100 includes N nodes. FIG. 1 schematically shows a node 1 to a node 8. A connection line between nodes illustratively represents a connection between the nodes, and is used to transmit data between the nodes. These nodes can store a full ledger, in other words, store states of all blocks and all accounts. The nodes in the blockchain system can generate the same state in the blockchain system by executing the same transaction, and the nodes in the blockchain system can store the same state database.

A transaction in the blockchain field can be a task unit executed in the blockchain system and recorded in the blockchain system. The transaction usually includes a From field, a To field, and a data field. When the transaction is a transfer transaction, the From field indicates an account address for initiating the transaction (that is, initiating a transfer task to another account), the To field indicates an account address for receiving the transaction (that is, receiving the transfer), and the data field includes a transfer amount.

The blockchain system includes a smart contract. The smart contract in the blockchain system is a contract whose execution can be triggered by a transaction in the blockchain system. The smart contract can be defined in the form of code. Calling the smart contract in the blockchain system is initiating a transaction pointing to a smart contract address, so that the nodes in the blockchain system run smart contract code in a distributed way.

In a contract deployment scenario, for example, Bob sends a transaction that includes information about creating a smart contract (that is, deploying a contract) to the blockchain system 100 shown in FIG. 1, a data field of the transaction includes code (such as byte code or machine code) of the contract to be created, and a To field of the transaction is empty, to indicate that the transaction is used to deploy the contract. A contract address "0x6f8ae93..." of the contract is determined after an agreement is reached among the nodes by using a consensus mechanism. Each node adds a contract account corresponding to the contract address of the smart contract to a state database, allocates a state storage corresponding to the contract account, stores the contract code, and stores a hash value of the contract code in the state storage of the contract, so that the contract is successfully created.

In a contract calling scenario, for example, Bob sends a transaction for calling a smart contract to the blockchain system 100 shown in FIG. 1, a From field of the transaction is an address of an account of a transaction initiator (i.e., Bob), a To field is the above-mentioned "0x6f8ae93...", i.e., the address of the called smart contract, and a data field of the transaction includes a method and a parameter for calling the smart contract. After a consensus on the transaction is reached in the blockchain system, the nodes in the blockchain system can individually execute the transaction, to individually execute the contract, and update state databases based on the execution of the contract.

As shown in FIG. 1, a CA contract and a signature contract are deployed in the blockchain system, where the CA contract applies in advance for a distributed key in the signature contract, and the CA contract can generate a distributed signature on certificate content by calling the signature contract with the help of a service provider in the off-chain service system, thereby providing a CA certificate.

To facilitate understanding of the implementations of this specification, some concepts in cryptography are first described below.

A distributed key generation (DKG) protocol is a distributed protocol in which a group of keys are generated through collaboration between multiple participants participating in the protocol. A verifiable secret sharing (VSS) protocol is an important theoretical basis of the DKG protocol.

VSS means that during sharing of secret data between multiple participants, the secret data can be split into multiple shards without disclosing the secret data, and each of the multiple participants keeps one shard. Then, when the secret data needs to be restored, all the shards need to be collected to successfully restore the complete secret data.

The VSS protocol was first proposed by Shamir in 1979, and is a polynomial-based secret sharing protocol. The VSS protocol is developed from Shamir's secret sharing (SSS). Therefore, Shamir's secret sharing is first described.

Shamir's secret sharing includes two phases: secret sharing (or secret distribution) and secret reconstruction. A polynomial needs to be first constructed by a dealer: $f \left(x\right) = {a}_{0} + {a}_{1} x + {a}_{2} {x}^{2} + ⋯ + {a}_{n} {x}^{n}$ Polynomial (*)

Here, *a*₀ is to-be-shared secret data.

This polynomial of degree n is uniquely determined by a group of coefficients (*a*₀, *a*₁, *a*₂, ..., *aₙ*), and this group of coefficients includes n+1 values. As such, if it is known that a curve corresponding to the polynomial of degree n passes through n+1 different points on a plane, that is, coordinates (*x*₁, *y*₁), (*x*₂, *y*₂), ..., (*xₙ, yₙ*), (*x*_{*n*+1}, *y*_{*n*+1}) of the n+1 different points are obtained, a system of (n+1)-variable linear equations of n+1 equations can be obtained. Therefore, values of the n+1 coefficients *a*₀, *a*₁, *a*₂, ..., *aₙ* can be determined by using this system of equations, then the polynomial (*) is determined, and finally a value of the secret data *a*₀ can be obtained. The coordinates (*x*₁, *y*₁), (*x*₂, *y*₂), ... , (*xₙ*, *yₙ*), (*x*_{*n*+1}, *y*_{*n*+1}) of the n+1 different points are n+1 secret shards.

A process of finding a curve passing through several existing points based on the points is referred to as polynomial interpolation. There are multiple methods for implementing polynomial interpolation. The following describes a common Lagrange interpolation method. Given a polynomial * of degree n, if it is known that a curve corresponding to the polynomial passes through coordinates of n+1 points (*x*₁, *y*₁), (*x*₂, *y*₂), ... , (*xₙ*, *yₙ*), (*x*_{*n*+1}, *y*_{*n*+1}) on a plane, a polynomial of the curve of degree n can be obtained by using the Lagrange interpolation method as follows: $\begin{matrix}f \left(x\right) = \frac{\left(x-{x}_{2}\right) \left(x-{x}_{3}\right) … \left(x-{x}_{n}\right) \left(x-{x}_{n + 1}\right)}{\left({x}_{1}-{x}_{2}\right) \left({x}_{1}-{x}_{3}\right) … \left({x}_{1}-{x}_{n}\right) \left({x}_{1}-{x}_{n + 1}\right)} {y}_{1} \\ + \frac{\left(x-{x}_{1}\right) \left(x-{x}_{3}\right) … \left(x-{x}_{n}\right) \left(x-{x}_{n + 1}\right)}{\left({x}_{2}-{x}_{1}\right) \left({x}_{2}-{x}_{3}\right) … \left({x}_{2}-{x}_{n}\right) \left({x}_{2}-{x}_{n + 1}\right)} {y}_{2} + ⋯ \\ + \frac{\left(x-{x}_{1}\right) \left(x-{x}_{2}\right) … \left(x-{x}_{n - 1}\right) \left(x-{x}_{n + 1}\right)}{\left({x}_{n}-{x}_{1}\right) \left({x}_{n}-{x}_{2}\right) … \left({x}_{n}-{x}_{n - 1}\right) \left({x}_{1}-{x}_{n + 1}\right)} {y}_{n} \\ + \frac{\left(x-{x}_{1}\right) \left(x-{x}_{2}\right) … \left(x-{x}_{n}\right) \left(x-{x}_{n + 1}\right)}{\left({x}_{n + 1}-{x}_{1}\right) \left({x}_{n + 1}-{x}_{2}\right) … \left({x}_{n}-{x}_{n - 1}\right) \left({x}_{n + 1}-{x}_{n}\right)} {y}_{n + 1}\end{matrix}$ Polynomial (**)

The polynomial (**) and the polynomial (*) are essentially equivalent. If x=0 in the polynomial (*), *f*(0) = *a*₀, that is, the value of the secret data *a*₀ can be obtained. Therefore, if x=0 in the polynomial (**), the value of the secret data *a*₀ can also be obtained, that is, f(0) = *a*₀.

For the n+1 points (*x*₁, *y*₁), ..., (*xₙ, yₙ*), (*x*_{*n*+1}, *y*_{*n*+1}) , the above-mentioned polynomial (**) can also be represented as follows: $L \left(x\right) = {\sum }_{j = 1}^{n + 1} {l}_{j} \left(x\right) ⋅ {y}_{j}$${l}_{j} \left(x\right) = {\prod }_{1 \leq m \leq n + 1 , m \neq j} \frac{\left(x-{x}_{m}\right)}{\left({x}_{j}-{x}_{m}\right)}$. Similarly, for a constant term or a secret value,

In conclusion, n+1 points on the polynomial can be randomly selected, and the n+1 points are shared between n+1 participants, for example, each participant obtains coordinates of one point. If coordinates of any fewer than n+1 points are collected, the original secret data *a*₀ cannot be inferred. Only after all the n+1 points are obtained, the value of the secret data *a*₀ can be restored by reconstructing polynomial coefficients. In addition, even if coordinates of any fewer than n+1 points are collected, for example, coordinates of n points, because there are countless curves of degree n passing through these n points, the value of the secret data *a*₀ is not disclosed in terms of probability. The degree n here is also referred to as a degree of the polynomial.

On this basis, threshold Shamir's secret sharing can be implemented. For example, t-of-n secret sharing is to share a secret between n participants and specify that a threshold for a minimum quantity of secret shards needed for restoration is greater than t, that is, greater than or equal to t+1. For example, in a transaction in which four parties participate, if an agreed threshold is 3, that is, n=4 and t=2, a secret can be restored only when at least t+1=3 participants provide secret shards of the participants. Otherwise, the secret cannot be restored. Specifically, a polynomial of degree t=2 can be constructed: $f \left(x\right) = {a}_{0} + {a}_{1} x + {a}_{2} {x}^{2}$ Polynomial (***)

It can be obtained that a curve corresponding to the polynomial of degree 2 passes through four different points on a plane, that is, coordinates (*x*₁, *y*₁), (*x*₂, *y*₂), (*x*₃, *y*₃), (*x*₄, *y*₄) of the four different points are obtained, and the coordinates of the four points are separately distributed to one participant in a secret sharing phase. The four participants are set to *Party*₁*, Party*₂*, Party*₃*, Party*₄*.* As such, assume that *Party*₁ has a shard (*x*₁, *y*₁), *Party*₂ has a shard (*x*₂*, y*₂)*, Party*₃ has a shard (*x*₃, *y*₃), and *Party*₄ has a shard (*x*₄, *y*₄). The polynomial (**) can be determined by any three points on the corresponding curve. Therefore, in *Partyᵢ* (*i* ∈ {1,2,3,4}), when any three participants provide secret shards of the participants, the polynomial (***) can be restored in a secret reconstruction phase, and a secret value *a*₀ can be obtained. When any fewer than three participants provide secret shards of the participants, the polynomial (***) cannot be restored, and the secret value *a*₀ cannot be obtained. The above-mentioned parameter t is also referred to as a threshold.

In the above-mentioned Shamir's secret sharing and threshold Shamir's secret sharing, a role for generating a polynomial and distributing secret shards is needed. This role can be referred to as a dealer. This dealer is an entity that knows the secret and needs to be a trusted third party of each participant. In addition, an entity for aggregating t+1 shards and obtaining the secret is further needed, for example, the dealer, a participant, or another entity.

In engineering practice, polynomials are usually defined in finite fields (based on elliptic curves or discrete logarithms) or prime fields (based on RSA) rather than real number fields or natural number fields.

In a classic Shamir's secret sharing scheme, assume that participants are honest. However, actually, there may be dishonest behavior or malicious behavior. For example, the dealer deceives one or more participants by sending an incorrect secret shard to the participant.

In secret sharing, verifiable secret sharing (VSS) is proposed to verify a malicious problem, for example, the participant verifying whether the dealer deceives the participant (verifying whether the dealer sends an incorrect secret shard, as described above). Feldman VSS is a practical VSS scheme constructed based on Shamir's secret sharing, including the following:

The dealer has a secret and distributes n shards of the secret to n participants. The secret can be reconstructed by t+1 participants. A polynomial of degree t can be constructed by using a scheme similar to the above-mentioned threshold Shamir's secret sharing scheme: $f \left(x\right) = {a}_{0} + {a}_{1} x + {a}_{2} {x}^{2} + ⋯ + {a}_{t} {x}^{t}$ Polynomial (****)

The dealer randomly selects *xᵢ* that is not 0 for each participant *Partyᵢ,* calculates *sᵢ = f*(*xᵢ*), and encrypts and sends the sub-secret *sᵢ* to the participant *Partyᵢ.* In addition, the dealer calculates *Aⱼ = g^{αⱼ},* where j=0, 1, 2, ..., and t, and discloses *Aⱼ,* that is, discloses {*A*₀, *A*₁, *A*₂, ... , *Aₜ*}*. Aⱼ* The parameter is referred to as a public verification parameter. A method for generating *Aⱼ* here is the same as a method for generating a public key based on a private key on an elliptic curve. Therefore, *Aⱼ* can also be referred to as a public key shard or a public key share.

For a case in which a selected polynomial corresponds to an elliptic curve, it is secure to disclose *Aⱼ,* because based on a property of the elliptic curve, *aⱼ* cannot be derived based on*Aⱼ.*

The public verification parameter {*A*₀, *A*₁, *A*₂, ... , *Aₜ*} is also referred to as a commitment. The commitment can be used to verify whether a value of the polynomial is correct because a coefficient of the polynomial is bound to the commitment. In discrete logarithm-based implementations, g is a generator of a cyclic group in the finite field, and g can be preconfigured for the dealer and *Partyᵢ.* The above-mentioned sub-secret can also be referred to as a secret shard.

After receiving the sub-secret *sᵢ*, the participant can verify validity of *sᵢ* by using the public verification parameter. Whether *sᵢ* is valid can be verified by verifying whether the following equation is true: ${g}^{{s}_{i}} = {A}_{0}^{{x}_{i}^{0}} ⋅ {A}_{1}^{{x}_{i}^{1}} ⋅ … ⋅ {A}_{t}^{{x}_{i}^{t}}$ Polynomial (*****)

A right side of the polynomial (*****) can be deduced as follows: $\begin{matrix}{A}_{0}^{{x}_{i}^{0}} ⋅ {A}_{1}^{{x}_{i}^{1}} ⋅ … ⋅ {A}_{t}^{{x}_{i}^{t}} = {\left({g}^{{a}_{0}}\right)}^{{x}_{i}^{0}} ⋅ {\left({g}^{{a}_{1}}\right)}^{{x}_{i}^{1}} ⋅ … ⋅ {\left({g}^{{a}_{t}}\right)}^{{x}_{i}^{t}} \\ = \left({g}^{{a}_{0} ⋅ {x}_{i}^{0}}\right) ⋅ \left({g}^{{a}_{1} ⋅ {x}_{i}^{1}}\right) ⋅ … ⋅ \left({g}^{{a}_{t} ⋅ {x}_{i}^{t}}\right) \\ = {g}^{{a}_{0} ⋅ {x}_{i}^{0} + {a}_{1} ⋅ {x}_{i}^{1} + ⋯ + {a}_{t} ⋅ {x}_{i}^{t}} \\ = {g}^{{a}_{0} + {a}_{1} ⋅ {x}_{i}^{1} + ⋯ + {a}_{t} ⋅ {x}_{i}^{t}} \\ = {g}^{f \left({x}_{i}\right)} = {g}^{{s}_{i}}\end{matrix}$

The right side of the polynomial (*****) can also be written as ${g}^{{s}_{i}} = {\prod }_{k = 0}^{t} {A}_{k}^{{x}_{i}^{k}}$.

It can be seen that for *Partyᵢ,* the dealer selects *xᵢ* that is not 0, for example, *xᵢ* is i. In this case, *Partyᵢ* can calculate the right side of the polynomial (*****) by using i and the public verification parameter {*A*₀, *A*₁, *A*₂, ..., *Aₜ*}, and calculate a left side of the polynomial (*****) by using generator g and the sub-secret *sᵢ*. Therefore, it can be determined, by determining whether the left and right sides of the polynomial (*****) are equal, whether (*xᵢ, g^{si}*) is a point on a curve corresponding to {*A*₀, *A*₁, *A*₂, ... , *Aₜ* }. This verification is a verification in a secret distribution phase. For simplicity, *xᵢ* = *i* usually can be used.

In engineering, implementations are usually based on discrete logarithms, and a modulo operation such as mod p is used for the above-mentioned equations, where p is a large prime number, and p is also preconfigured for the dealer and *Partyᵢ.* mod p is omitted in the following similar places.

In the secret reconstruction phase, for example, at least t+1 participants send secret shards of the participants to the dealer, and the dealer can verify each secret shard by using a public verification parameter corresponding to the polynomial. If the verification fails, it can be proved that a participant that sends the secret shard acts maliciously. A secret shard on which verification succeeds can be used as a basis for reconstructing the secret.

In the secret reconstruction phase, after secret shards of the at least t+1 participants are collected, a polynomial f(x) can be reconstructed by using the Lagrange interpolation method, to obtain a value of f(0), that is, obtain a secret value.

In addition, validity of the secret *a*₀ can be verified by using the public verification parameter {*A*₀, *A*₁, *A*₂, ... , *Aₜ*}, that is, whether (0, *a*₀) is a point on the curve can be verified, because there is the following relationship: $\begin{matrix}{A}_{0}^{{0}^{0}} ⋅ {A}_{1}^{{0}^{1}} ⋅ … ⋅ {A}_{t}^{{0}^{t}} = {\left({g}^{{a}_{0}}\right)}^{{0}^{0}} ⋅ {\left({g}^{{a}_{1}}\right)}^{{0}^{1}} ⋅ … ⋅ {\left({g}^{{a}_{t}}\right)}^{{0}^{t}} \\ = \left({g}^{{a}_{0} ⋅ {0}^{0}}\right) ⋅ \left({g}^{{a}_{1} ⋅ {0}^{1}}\right) ⋅ … ⋅ \left({g}^{{a}_{t} ⋅ {0}^{t}}\right) \\ = {g}^{{a}_{0} ⋅ {0}^{0} + {a}_{1} ⋅ {0}^{1} + ⋯ + {a}_{t} ⋅ {0}^{t}} \\ = {g}^{{a}_{0} ⋅ 1 + {a}_{1} ⋅ 0 + ⋯ + {a}_{t} ⋅ 0} \\ = {g}^{{a}_{0}} = {A}_{0} \\ = {g}^{f \left(0\right)}\end{matrix}$

That is, the validity of the secret *a*₀ can be simplified to be verified by using the public verification parameter *A*₀.

In the above-mentioned deduction, 0° = 1 is defined, and 0*^{k}* = 0, *k* ≠ 0.

In the above-mentioned scheme, a dealer is needed, and the dealer is centralized, and is an entity that knows the secret. As described above, the dealer needs to be a trusted third party, or the dealer needs to be trusted by participants. In a distributed scenario, both distributed secret distribution and distributed secret reconstruction need to be implemented. Therefore, the centralized dealer needs to be removed. As such, trust removal is implemented. To resolve this problem, Rabin et al. proposed an improved protocol named Joint-Feldman in 1999. A basic idea of this protocol is to execute the Feldman VSS protocol n times in parallel. Each participant locally generates a random polynomial and then shares a randomly selected secret value between all the participants. A commitment of a secret rather than a secret is shared. Therefore, the secret cannot be restored provided that there is no collusion and cheating by multiple persons whose quantity exceeds the threshold t. Such a distributed VSS protocol in which the trusted third party is removed is also referred to as a distributed VSS (DVSS) protocol.

Specifically, four participants are used as an example. If the threshold is t=2, the degree of the polynomial is also 2, and a decentralized threshold secret sharing or Joint-Feldman implementation scheme includes the following:

Each *Pᵢ* (*Partyᵢ* is briefly written as *Pᵢ*, where *i* ∈ {1,2,3,4}) sets a to-be-shared secret *s*_{*i*0} and randomly selects other parameters to generate a polynomial of degree t.

A participant *P*₁ generates a polynomial of degree 2: ${f}_{1} \left(z\right) = {a}_{10} + {a}_{11} z + {a}_{12} {z}^{2} ,$ where *a*₁₀ is a secret *s*₁ set by *P*₁.

A participant *P*₂ generates a polynomial of degree 2: ${f}_{2} \left(z\right) = {a}_{20} + {a}_{21} z + {a}_{22} {z}^{2} ,$ where *a*₂₀ is a secret *s*₂ set by *P*₂.

A participant *P*₃ generates a polynomial of degree 2: ${f}_{3} \left(z\right) = {a}_{30} + {a}_{31} z + {a}_{32} {z}^{2} ,$ where *a*₃₀ is a secret *S*₃ set by *P*₃.

A participant *P*₄ generates a polynomial of degree 2: ${f}_{4} \left(z\right) = {a}_{40} + {a}_{41} z + {a}_{42} {z}^{2} ,$ where *a*₄₀ is a secret *s*₄ set by *P*₄.

Then, each participant *Pᵢ* generates and distributes n values on a curve corresponding to the polynomial of degree t of each participant. Here, still assume that n=4, t=2, and n = 1,2,3,4.

The participant *P*₁ generates *s*₁₁ = *f*₁(1) , *s*₁₂ = *f*₁(2), *s*₁₃ = *f*₁(3), *s*₁₄ = *f*₁(4), retains *s*₁₁, encrypts and sends *S*₁₂ to *P*₂, encrypts and sends *s*₁₃ to *P*₃, and encrypts and sends *s*₁₄ to *P*₄.

The participant *P*₂ generates *s*₂₁ *= f*₂(1), *s*₂₂ = *f*₂(2), *s*₂₃ = *f₂* (3), S₂₄ = *f*₂(4), retains *s*₂₂, encrypts and sends *s*₂₁ to *P*₁, encrypts and sends *s*₂₃ to *P*₃, and encrypts and sends *s*₂₄ to*P*₄.

The participant *P*₃ generates *s*₃₁ = *f*₃(1), *s*₃₂ = *f*₃(2), *s*₃₃ = *f*₃(3), *s*₃₄ = *f*₃(4), retains *s*₃₃, encrypts and sends *s*₃₁ to *P*₁, encrypts and sends *S*₃, to *P*₂, and encrypts and sends *s*₃₄ to*P*₄.

The participant *P*₄ generates *s*₄₁ = *f*₄(1), *s*₄₂ = *f*₄(2), *s*₄₃ = *f*₄(3), *s*₄₄ = *f*₄(4) , retains *s*₄₄, encrypts and sends *s*₄₁ to *P*₁, encrypts and sends *s*₄₂ to *P*₂, and encrypts and sends *s*₄₃ to *P*₃.

In addition, each participant *Pᵢ* further generates a public verification parameter *Aᵢₖ = g^{aik}* corresponding to the polynomial of degree t of each participant, where *k* = 0,1, ... *, t,* and publishes the public verification parameter to each participant. Details are as follows:

The participant *P*₁ generates *A*₁*ₖ = g*^{*a*1}*^{k},* where *k* = 0,1, *..., t,* including A₁₀ *= g*^{*a*10}*, A*₁₁ = *g*^{*a*11}*,* and A₁₂ *= g*^{*a*12}*,* and broadcasts {*A*₁₀, *A*₁₁, *A*₁₂} to *P*₂, *P*₃, and *P*₄.

The participant *P*₂ generates *A*₂*ₖ = g*^{*a*2}*^{k},* where *k* = 0,1, *..., t,* including *A*₂₀ *= g*^{*a*20}*, A*₂₁ *= g*^{*a*21}*,* and *A*₂₂ = *g*^{*a*22}, and broadcasts {*A*₂₀, *A*₂₁, *A*₂₂} to *P*₁, *P*₃, and *P*₄.

The participant *P*₃ generates *A*₃*ₖ = g*^{*a*3}*^{k},* where *k* = 0,1, *..., t,* including *A*₃₀ = *g*^{*a*30}*, A*₃₁ = *g*^{*a*31}, and *A*₃₂ *= g*^{*a*32}*,* and broadcasts {*A*₃₀*, A*₃₁, *A*₃₂} to *P*₁, *P*₂, and *P*₄.

The participant *P*₄ generates *A*₄*ₖ = g*^{*a*4}*^{k},* where *k* = 0,1, *..., t,* including *A*₄₀ *= g*^{*a*40}*, A*₄₁ *= g*^{*a*41}*,* and *A*₄₂ = *g*^{*a*42}*,* and broadcasts {*A*₄₀, *A*₄₁, *A*₄₂} to *P*₁, *P*₂, and *P*₃.

As such, after receiving *S*₂₁, *P*₁ can perform verification by using {*A*₂₀, *A*₂₁, *A₂₂*); after receiving *s*₃₁, *P*₁ can perform verification by using {*A*₃₀, *A*₃₁, *A*₃₂}; and after receiving *s*₄₁, *P*₁ can perform verification by using {*A*₄₀, *A*₄₁, *A*₄₂}. A verification method is similar to the above-mentioned descriptions. Details are omitted for simplicity.

Similarly, after receiving *s*₁₂, *P*₂ can perform verification by using {*A*₁₀, *A*₁₁, *A*₁₂}; after receiving *s*₃₂, *P*₂ can perform verification by using {*A*₃₀*, A*₃₁, *A*₃₂}; and after receiving *s*₄₂, *P*₂ can perform verification by using {*A*₄₀, *A*₄₁, *A*₄₂}.

Similarly, after receiving *s*₁₃, *P*₃ can perform verification by using {*A*₁₀, *A*₁₁, *A*₁₂}; after receiving *s*₂₃, *P*₃ can perform verification by using {*A*₂₀, *A*₂₁, *A₂₂*}; and after receiving *s*₄₃, *P*₃ can perform verification by using {*A*₄₀, *A*₄₁, *A*₄₂}.

Similarly, after receiving *s*₁₄, *P*₄ can perform verification by using {*A*₁₀, *A*₁₁, *A*₁₂}; after receiving *s*₂₄, *P*₄ can perform verification by using {*A*₂₀, *A*₂₁, *A*₂₂}; and after receiving *s*₃₄*, P*₄ can perform verification by using {*A*₃₀, *A*₃₁, *A*₃₂}.

Assume that a participant set that is obtained after each participant performs verification and on which verification succeeds is set to Qual, and Qual={*P*₁, *P*₂, *P*₃, *P*₄} is set.

*P*₁ locally holds secret shards *s*₁₁, *s*₂₁, *s*₃₁ and *s*₄₁ generated by different participants and public verification parameters {*A*₁₀, *A*₁₁, *A*₁₂}, {*A*₂₀, *A*₂₁, *A*₂₂}, {*A*₃₀, *A*₃₁, *A*₃₂}, and {*A*₄₀, *A*₄₁, *A*₄₂}.

*P*₂ locally holds secret shards *S*₁₂ *S*₂₂ , *S*₃₂, and *s*₄₂ generated by different participants and public verification parameters {*A*₁₀, *A*₁₁, *A*₁₂}, {*A*₂₀, *A*₂₁, *A*₂₂}, {*A*₃₀, *A*₃₁, *A*₃₂}, {*A*₄₀, *A*₄₁, *A*₄₂}.

*P*₃ locally holds secret shards *S*₁₃, *S*₂₃, *S*₃₃, and *s*₄₃ generated by different participants and public verification parameters {*A*₁₀, *A*₁₁, *A*₁₂}, {*A*₂₀, *A*₂₁, *A*₂₂}, {*A*₃₀, *A*₃₁, *A*₃₂}, {*A*₄₀, *A*₄₁, *A*₄₂}.

*P*₄ locally holds secret shards *s*₁₄, *S*₂₄, *s*₃₄*,* and *s*₄₄ generated by different participants and public verification parameters {*A*₁₀, *A*₁₁, *A*₁₂}, {*A*₂₀, *A*₂₁, *A*₂₂}, {*A*₃₀, *A*₃₁, *A*₃₂}, and {*A*₄₀, *A*₄₁, *A*₄₂}.

Then, the participant *P*₁ can calculate that the secret shard *s*₁ is *s*₁ = *S*₁₁ + *s*₂₁ + *s*₃₁ + *s*₄₁; the participant *P*₂ can calculate that the secret shard *s*₂ is *s*₂ = *s*₁₂ + *s*₂₂ + *s*₃₂ + *s*₄₂; the participant *P*₃ can calculate that the secret shard *s*₃ is *s*₃ = *s*₁₃ + *s*₂₃ + *s*₃₃ + *s*₄₃; the participant *P*₄ can calculate that the secret shard *s*₄ is *s*₄ = *s*₁₄ + *s*₂₄ + *s*₃₄ + *s*₄₄; and each participant *Pᵢ* can broadcast the secret shard *sᵢ* calculated by the participant to another participant. After collecting at least threshold t+1 secret shards, in {*S*₁, *S*₂, *S*₃, *S*₄}, each participant *Pᵢ* can reconstruct the secret *s*₀. Here, for t=2, after collecting at least threshold t+1=2+1=3 secret shards, each participant *Pᵢ* can reconstruct the secret *s*₀.

This is because summation can be performed on the curves of all the participants to obtain a total curve: $f \left(z\right) = {f}_{1} \left(z\right) + {f}_{2} \left(z\right) + {f}_{3} \left(z\right) + {f}_{4} \left(z\right)$ $\begin{matrix}f \left(z\right) = \left({a}_{10}+{a}_{11}z+{a}_{12}{z}^{2}\right) + \left({a}_{20}+{a}_{21}z+{a}_{22}{z}^{2}\right) + \left({a}_{30}+{a}_{31}z+{a}_{32}{z}^{2}\right) \\ + \left({a}_{40}+{a}_{41}z+{a}_{42}{z}^{2}\right)\end{matrix}$ $f \left(z\right) = \left({a}_{10}+{a}_{20}+{a}_{30}+{a}_{40}\right) + \left({a}_{11}+{a}_{21}+{a}_{31}+{a}_{41}\right) z + \left(\begin{matrix}{a}_{12} + \\ {a}_{22} + {a}_{32} + {a}_{42}\end{matrix}\right) {z}^{2}$ Polynomial (I)

In this case, ${s}_{1} = {s}_{11} + {s}_{21} + {s}_{31} + {s}_{41} = {f}_{1} \left(1\right) + {f}_{2} \left(1\right) + {f}_{3} \left(1\right) + {f}_{4} \left(1\right) ;$ ${s}_{2} = {s}_{12} + {s}_{22} + {s}_{32} + {s}_{42} = {f}_{1} \left(2\right) + {f}_{2} \left(2\right) + {f}_{3} \left(2\right) + {f}_{4} \left(2\right) ;$ ${s}_{3} = {s}_{13} + {s}_{23} + {s}_{33} + {s}_{43} = {f}_{1} \left(3\right) + {f}_{2} \left(3\right) + {f}_{3} \left(3\right) + {f}_{4} \left(3\right) ;$ and ${s}_{4} = {s}_{14} + {s}_{24} + {s}_{34} + {s}_{44} = {f}_{1} \left(4\right) + {f}_{2} \left(4\right) + {f}_{3} \left(4\right) + {f}_{4} \left(4\right) .$

For the total curve *f*(*z*)*,* there are the following relationships: ${s}_{1} = {f}_{1} \left(1\right) + {f}_{2} \left(1\right) + {f}_{3} \left(1\right) + {f}_{4} \left(1\right) = f \left(1\right) ;$ ${s}_{2} = {f}_{1} \left(2\right) + {f}_{2} \left(2\right) + {f}_{3} \left(2\right) + {f}_{4} \left(2\right) = f \left(2\right) ;$ ${s}_{3} = {f}_{1} \left(3\right) + {f}_{2} \left(3\right) + {f}_{3} \left(3\right) + {f}_{4} \left(4\right) = f \left(3\right) ;$ and ${s}_{4} = {f}_{1} \left(4\right) + {f}_{2} \left(4\right) + {f}_{3} \left(4\right) + {f}_{4} \left(4\right) = f \left(4\right) .$

The secret is *s*₀ = *a*₁₀ + *a*₂₀ + *a*₃₀ + *a*₄₀.

As such, after each participant *Pᵢ* collects at least three of the secret shards *s*₁, *s*₂, *s*₃, and *s*₄, it is equivalent to that at least three points on a curve corresponding to the polynomial (I) are obtained, that is, at least three of four coordinates (*x*₁ = 1, *y*₁ = *s*₁), (*x*₂ = 2, *y*₂ = *s*₂), (*x*₃ = 3, *y*₃ = *s*₃), (*x*₄ = 4, *y*₄ = *s*₄) are obtained. Therefore, the total curve *f*(*z*) can be restored. Further, it can be calculated that *f*(0) = *a*₁₀ + *a*₂₀ + *a*₃₀ + *a*₄₀ = *s*₀, and therefore the secret *s*₀ can be obtained.

In addition, validity of the secret *s*ᵢ can be verified by using the verification parameters {*A*₁₀, *A*₁₁, *A*₁₂}, {*A*₂₀, *A*₂₁, *A*₂₂}, {*A*₃₀, *A*₃₁, *A*₃₂}, and {*A*₄₀, *A*₄₁, *A*₄₂}, that is, it can be verified whether (0, *s*ᵢ) is a point on the total curve. Specifically, the validity is determined by verifying whether the following equation is true: ${g}^{{s}_{i}} = {\prod }_{j = 1}^{n} {\prod }_{k = 0}^{t} {A}_{{j}_{k}}^{{x}_{i}^{k}}$ Polynomial (II)

This is because there is the following relationship: $\begin{matrix}{\prod }_{j = 1}^{n} {\prod }_{k = 0}^{t} {A}_{jk}^{{x}_{i}^{k}} = \left({A}_{10}^{{x}_{i}^{0}}⋅{A}_{11}^{{x}_{i}^{1}}⋅…⋅{A}_{1 t}^{{x}_{i}^{t}}\right) ⋅ \left({A}_{20}^{{x}_{i}^{0}}⋅{A}_{21}^{{x}_{i}^{1}}⋅…⋅{A}_{2 t}^{{x}_{i}^{t}}\right) ⋅ … ⋅ \left({A}_{n 0}^{{x}_{i}^{0}}⋅{A}_{n 1}^{{x}_{i}^{1}}⋅…⋅{A}_{nt}^{{x}_{i}^{t}}\right) \\ = \left({\left({g}^{{a}_{10}}\right)}^{{x}_{i}^{0}}⋅{\left({g}^{{a}_{11}}\right)}^{{x}_{i}^{1}}⋅…⋅{\left({g}^{{a}_{1 t}}\right)}^{{x}_{i}^{t}}\right) ⋅ \left({\left({g}^{{a}_{20}}\right)}^{{x}_{i}^{0}}⋅{\left({g}^{{a}_{21}}\right)}^{{x}_{i}^{1}}⋅…⋅{\left({g}^{{a}_{2 t}}\right)}^{{x}_{i}^{t}}\right) ⋅ … \\ ⋅ \left({\left({g}^{{a}_{n 0}}\right)}^{{x}_{i}^{0}}⋅{\left({g}^{{a}_{n 1}}\right)}^{{x}_{i}^{1}}⋅…⋅{\left({g}^{{a}_{nt}}\right)}^{{x}_{i}^{t}}\right) \\ = {g}^{\left({a}_{10}⋅{x}_{i}^{0}+{a}_{11}⋅{x}_{i}^{1}+⋯+{a}_{1 t}⋅{x}_{i}^{t}\right) + \left({a}_{20}⋅{x}_{i}^{0}+{a}_{21}⋅{x}_{i}^{1}+⋯+{a}_{2 t}⋅{x}_{i}^{t}\right) + … + \left({a}_{n 0}⋅{x}_{i}^{0}+{a}_{n 1}⋅{x}_{i}^{1}+⋯+{a}_{nt}⋅{x}_{i}^{t}\right)}\end{matrix}$ $\begin{matrix}= {g}^{\left({a}_{10}⋅{x}_{i}^{0}+{a}_{20}⋅{x}_{i}^{0}+⋯+{a}_{n 0}⋅{x}_{i}^{0}\right) + \left({a}_{11}⋅{x}_{i}^{1}+{a}_{21}⋅{x}_{i}^{1}+⋯{a}_{n 1}⋅{x}_{i}^{1}\right) + ⋯ + \left({a}_{1 t}⋅{x}_{i}^{t}+{a}_{2 t}⋅{x}_{i}^{t}+⋯{a}_{nt}⋅{x}_{i}^{t}\right)} \\ = {g}^{\left({a}_{10}+{a}_{20}+⋯+{a}_{n 0}\right) + \left({a}_{11}+{a}_{21}+⋯{a}_{n 1}\right) ⋅ {x}_{i}^{1} + ⋯ + \left({a}_{1 t}+{a}_{2 t}+⋯{a}_{nt}\right) ⋅ {x}_{i}^{t}} \\ = {g}^{f \left({x}_{i}\right)} \\ = {g}^{{f}_{1} \left({s}_{i}\right) + {f}_{2} \left({s}_{i}\right) + ⋯ + {f}_{n} \left({s}_{i}\right)} \\ = {g}^{{s}_{1 i} + {s}_{2 i} + ⋯ + {s}_{ni}} \\ = {g}^{{s}_{i}}\end{matrix}$

Usually, assume that a right side of an equal sign of the polynomial (II) is a public key shard, and is denoted as *pubᵢ, i* = 1,2, ..., *n,* to verify a corresponding private key shard. ${pub}_{i} = {\prod }_{j = 1}^{n} {\prod }_{k = 0}^{t} {A}_{jk}^{{x}_{i}^{k}}$

As described above, usually, *xᵢ* = *i* for each *i* = 1,2, ··· , *n* can be used. As such, i can be used as a number of each participant.

For verification of the secret *s*₀, that is, *xᵢ* = 0, the above-mentioned equation can be further deduced as follows: $\begin{matrix}{\prod }_{j = 1}^{n} {\prod }_{k = 0}^{t} {A}_{jk}^{{x}_{0}^{k}} = \left({A}_{10}^{{x}_{0}^{0}}⋅{A}_{11}^{{x}_{0}^{1}}⋅…⋅{A}_{1 t}^{{x}_{0}^{t}}\right) ⋅ \left({A}_{20}^{{x}_{0}^{0}}⋅{A}_{21}^{{x}_{0}^{1}}⋅…⋅{A}_{2 t}^{{x}_{0}^{t}}\right) ⋅ … ⋅ \left({A}_{n 0}^{{x}_{0}^{0}}⋅{A}_{n 1}^{{x}_{0}^{1}}⋅…⋅{A}_{nt}^{{x}_{0}^{t}}\right) \\ = \left({A}_{10}^{{0}^{0}}⋅{A}_{11}^{{0}^{1}}⋅…⋅{A}_{1 t}^{{0}^{t}}\right) ⋅ \left({A}_{20}^{{0}^{0}}⋅{A}_{21}^{{0}^{1}}⋅…⋅{A}_{2 t}^{{0}^{t}}\right) ⋅ … ⋅ \left({A}_{n 0}^{{0}^{0}}⋅{A}_{n 1}^{{0}^{1}}⋅…⋅{A}_{nt}^{{0}^{t}}\right) \\ = \left({A}_{10}^{{0}^{0}}⋅{A}_{20}^{{0}^{0}}⋅…⋅{A}_{n 0}^{{0}^{0}}\right) ⋅ \left({A}_{11}^{{0}^{1}}⋅{A}_{21}^{{0}^{1}}⋅…⋅{A}_{n 1}^{{0}^{1}}\right) ⋅ … ⋅ \left({A}_{1 t}^{{0}^{t}}⋅{A}_{2 t}^{{0}^{t}}⋅…⋅{A}_{nt}^{{0}^{t}}\right) \\ = {\left({A}_{10}⋅{A}_{20}⋅…⋅{A}_{n 0}\right)}^{{0}^{0}} ⋅ {\left({A}_{11}⋅{A}_{21}⋅…⋅{A}_{n 1}\right)}^{{0}^{1}} ⋅ {\left({A}_{1 t}⋅{A}_{2 t}⋅…⋅{A}_{nt}\right)}^{{0}^{t}}\end{matrix}$

0⁰ = 1 is defined, and 0*^{k}* = 0, *k* ≠ 0. Therefore, the above-mentioned equation can be further deduced as follows:$\begin{matrix}= {\left({A}_{10}⋅{A}_{20}⋅…⋅{A}_{n 0}\right)}^{{0}^{0}} \\ = {A}_{10} ⋅ {A}_{20} ⋅ … ⋅ {A}_{n 0} \\ = {g}^{\left({a}_{10}+{a}_{20}+⋯+{a}_{n 0}\right)} \\ = {g}^{f \left(0\right)} \\ = {g}^{{s}_{0}}\end{matrix}$ Polynomial (III) = (*A*₁₀ · *A*₂₀ · ..., *A*_{*n*0})⁰⁰ = *A*₁₀ · *A*₂₀ · ... ·*A*_{*n*0} = *_{g}*^{(*a*10+*a*20+···+a*n*0)} = *g^{f}*(0) *= g*^{*s*0}

It can be seen that validity of *s*₀ can be verified based on the polynomial (III).

In addition, based on the deduction in the above-mentioned polynomial (III), verification of the validity of *s*₀ can be further reduced as follows: ${g}^{{s}_{o}} = {\prod }_{i = 1}^{n} {A}_{i 0} Polynomial$ Polynomial (IV)

Usually, assume that a right side of an equal sign of the polynomial (IV) is a total public key, and is denoted as *pub.*

The above-mentioned Joint-Feldman protocol can implement distributed secret sharing, that is, complete main content of DKG. The above-mentioned protocols from Shamir to threshold Shamir, the Feldman VSS protocol, and the Joint-Feldman DVSS protocol are a series of secret sharing implementation schemes. Actually, in addition to the series of schemes starting with Shamir's secret sharing, there are schemes based on additive secret sharing, SPDZ (an important protocol in secure multi-party computation, first proposed in 2012), the Chinese remainder theorem, etc., which can ultimately implement DKG. These schemes are omitted here and are not described.

Through implementation of the above-mentioned DKG protocol, a problem of overall unavailability caused by a fault in a single node when a single entity generates a key and a problem of a need to trust the single node that generates the key can be overcome. However, because each participant *Pᵢ* broadcasts a generated secret shard *sᵢⱼ,* i, j ∈ (1,2, ..., n), n is a quantity of participants, and each participant *Pᵢ* can broadcast a secret shard *sᵢ* calculated by the participant to another participant, each participant *Pᵢ* can reconstruct a secret *s*₀ after collecting at least threshold t+1 secret shards, in {*s*₁, *s*₂, *s*₃, *s*₄}. Consequently, at least t+1 participants obtain the finally reconstructed secret *s*₀, that is, the secret *s*₀ is exposed, and a total curve becomes unavailable. If a new secret *s*₀ needs to be generated next time, a process of executing the DKG protocol needs to be repeated.

Properties of the DKG protocol in terms of threshold and secret commitments, combined with a matching threshold signature algorithm, can be used to construct a distributed threshold signature protocol. As a distributed system, a blockchain uses a large quantity of signature algorithms. As such, nodes in the blockchain generate secret shards in a distributed way through DKG, and after at least t+1 blockchain nodes sign to-be-signed information by using secret shards as private key shards and broadcast the information, any blockchain node that collects at least t+1 signature shards can restore a total signature, and can restore a total public key by the above-mentioned method, and the restored total signature can be verified by using the total public key, to implement a threshold signature. In addition, an advantage of this is that a secret shard held by each blockchain node does not need to be broadcast to another node, and therefore the secret shard of each blockchain node is not exposed and a private key is not exposed. Therefore, a secret shard generated at a time through DKG can be repeatedly used multiple times, and there is no need to execute the DKG protocol for each threshold signature.

A basic elliptic curve digital signature algorithm (ECDSA) can include the following process:

A signer Alice selects an elliptic curve *E_{q}*(*a, b*) and a base point g, and shares the information with a verifier Bob, where *q* is a modulus.

Alice selects a private key $x ∈ {ℤ}_{q}$ in a finite field ${ℤ}_{q}$, and generates a public key *X = g^{x}* (or *x* ·g) based on the private key.

Alice selects a random number $k ∈ {ℤ}_{q}$ in the finite field ${ℤ}_{q}$, and calculates *R*=*g*^{*k*-1} = (*a*₁, *b*₁), and *a*₁ and *b*₁ are respectively a horizontal coordinate and a vertical coordinate of a point K on an elliptic curve. Assume that r=*a*₁.

Alice obtains a digest value m *= H*(*message*) by performing hash calculation on a to-be-signed message, and calculates: $s = k ⋅ \left(m+r⋅x\right) mod q$ Equation (a)

Alice generates a signature *σ* = (*r, s*), and sends the message, the signature *σ*, and the public key *X* to a signer Bob.

Bob calculates coordinates of a point K' by using the base point g, the signature *σ*, and the public key *X*: $K ′ = {g}^{\frac{m}{s}} ⋅ {X}^{\frac{r}{s}} = \left({a}_{1}^{′}, {b}_{1}^{′}\right)$ Equation (b)

Bob compares whether ${a}_{1}^{′}$ is equal to r. If yes, the signature is valid. Otherwise, the signature is invalid.

The above-mentioned basic ECDSA signature algorithm can be extended to a threshold signature algorithm. For example, after the above-mentioned DKG process, each of n signers *P*₁, *P*₂, *... , Pₙ* has a secret shard of the signer, and has a total public key. A threshold is t, and *t < n.* Each of at least t+1 signers of the n participants uses a secret shard of the signer as a private key shard, and signs and broadcasts the same to-be-signed information. Then, any verifier that collects at least t+1 signature shards can restore a total signature, and can verify the total signature by using the total public key, to implement a threshold signature.

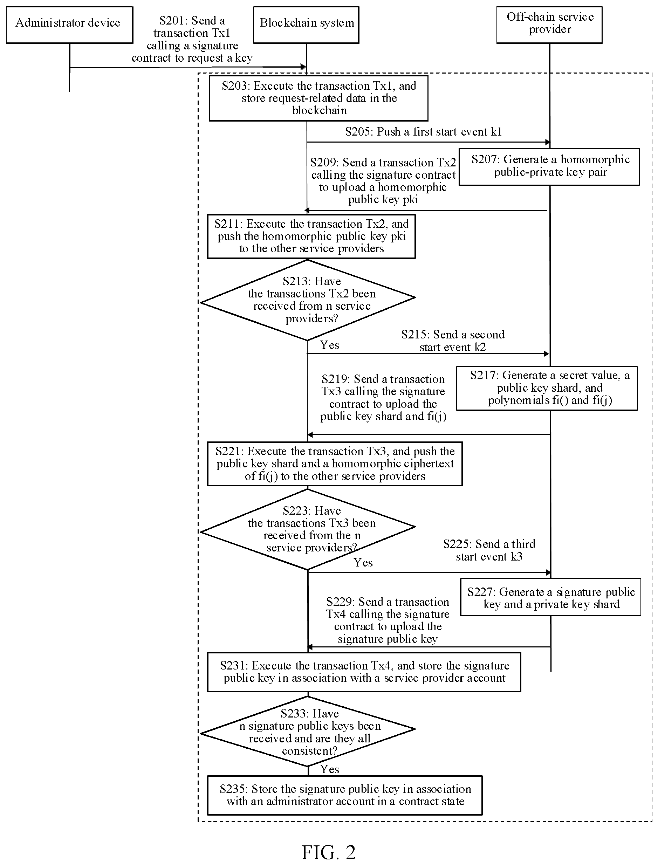

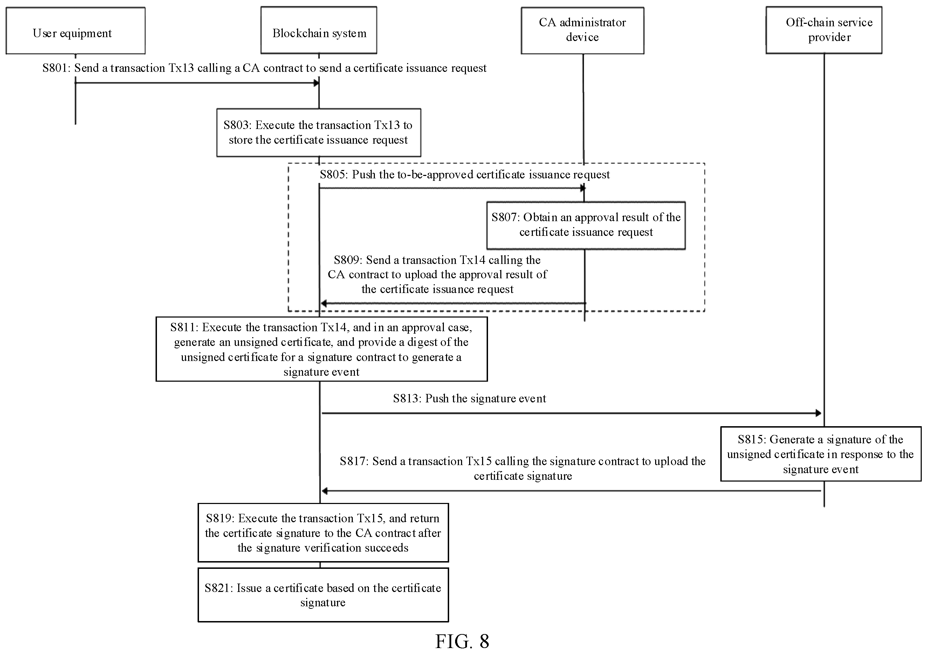

A certificate issuance solution in implementations of this specification includes three main parts: an initialization phase, a certificate application phase, and a certificate issuance phase. The initialization phase includes the following three small phases: (1) a key application phase, (2) a preprocessing phase, (3) a root CA (Root CA) or an intermediate CA (Intermediate CA) issuance phase, and (4) a CA contract deployment phase. The following first describes the initialization phase in implementations of this specification with reference to FIG. 2 to FIG. 7, and describes the certificate application phase and the certificate issuance phase in implementations of this specification with reference to FIG. 8. In implementations of this specification, the ECDSA signature algorithm is used as an example for description. It can be understood that the solutions in implementations of this specification can similarly use another signature algorithm.

FIG. 2 is a flowchart illustrating a key application phase in a threshold signature implementation method, according to an implementation of this specification. As described above, a signature contract is pre-deployed in the blockchain system, and the off-chain service system can include devices of more than n service providers. FIG. 2 shows one of the n service providers as an example. It can be understood that other service providers in the n service providers operate the same as the off-chain service provider in FIG. 2.

As shown in FIG. 2, first, in step S201, an administrator device sends a transaction Tx1 calling a signature contract to the blockchain system to request to generate a key.

The administrator device is a device of an administrator of the blockchain system, and the administrator has certain permissions, for example, can deploy a CA contract. By requesting a key, the administrator can subsequently transfer the requested key to the CA contract for use. A sender (sender) of the transaction Tx1 is an administrator account (e.g., Account1).

The transaction Tx1 includes a parameter for performing distributed signing, which can include specified parameters like accounts of the n service providers and a signature threshold t.

In some implementations, the parameter can further include a service threshold k in a preprocessing phase, where n>k>t. In other words, in the preprocessing phase, the preprocessing phase can be pushed down when a quantity of service providers is greater than or equal to the threshold k, and in a signing phase, a signature can be completed when a quantity of service providers is greater than the threshold t.

In some implementations, the parameter can further include several alternate service providers participating in a distributed key generation phase to obtain a private key shard, but not participating in the preprocessing phase and the signing phase and only participating in the preprocessing phase and the signing phase when a private key shard of another service provider is lost.

In some implementations, the parameter can further include a minimum quantity min and a maximum quantity max that are used for the preprocessing phase, and the minimum quantity and the maximum quantity are used to limit a quantity of preprocessing processes, so that multiple groups of intermediate data are generated through multiple preprocessing processes for use in a CA certificate issuance phase, that is, if one group of intermediate data fails, intermediate data of another preprocessing process can be used, making a subsequent signing process highly available.

A parameter group (2, 5, 7, 9) is used as an example. 2 is the signature threshold t, that is, any t+1=3 private key shards can complete distributed signing. 5 is the service threshold k, that is, at least five service providers are ensured to participate in the preprocessing phase, so that it can be ensured that two service providers are allowed to fail in the signing phase during a signing process. "7" indicates that at least seven service providers are ensured to participate in the key generation phase, so that two service providers are allowed to fail in the preprocessing phase. 9-7=2 is a quantity of alternate service providers.

Step S203: The blockchain system executes the transaction Tx1, and stores requestrelated data in the blockchain.

Each node in the blockchain system associatively stores the account Account1 and a corresponding parameter in a contract state of the signature contract based on the transaction Tx1 after executing the transaction Tx1. The parameter includes, for example, the accounts of the n service providers, k, t, max, and min that are specified above.

Specifically, a data table (e.g., Table1) corresponding to distributed threshold signing can be maintained in the contract state of the signature contract, and the blockchain node can add a row corresponding to Account1 to Table1 and add Account1 and the specified parameters like the accounts of the n service providers, k, t, max, and min to one field in the row based on the transaction Tx1. "Account1" in this row indicates that Account1 has authority to obtain a signature.

In addition, the blockchain node further generates a receipt of the transaction Tx1 based on the transaction Tx1. The receipt includes a first start event k1 set to a predetermined topic (topic), and the predetermined topic is, for example, a keyword including "initialization phase", which is not limited here. The first start event k1 can include Account1 and the parameters n, k, t, max, min, etc., and instructs each of the n service providers to enter a key generation phase corresponding to Account1.

In step S205, the blockchain system pushes the first start event k1 to each of the n service providers.

The n service providers in the blockchain system can subscribe an event with the above-mentioned predetermined topic to a certain blockchain node in the blockchain system in advance. For example, a service provider *P*₁ subscribes an event with the above-mentioned topic to a node 1 in the blockchain system in advance, and the node 1 sends the first start event k1 to the service provider *P*₁ based on the subscription of the service provider *P*₁ after generating the first start event k1.

It can be understood that implementations of this specification are not limited to pushing the event k1 from the blockchain system to the n service providers. In one implementation, each service provider can obtain the event k1 from the receipt of the transaction Tx1 by retrieving each transaction receipt from the blockchain system.

In step S207, the off-chain service provider generates a homomorphic public-private key pair.

Assume that the n service providers are respectively *P*₁, *P*₂, ..., and *Pₙ.* Each service provider *Pᵢ* generates a Paillier public-private key pair (*pkᵢ, skᵢ*) for performing homomorphic encryption in response to the received event k1. *skᵢ* is a private key, and *pkᵢ* is a corresponding public key. A homomorphic encryption technology can perform "homomorphic" processing on plaintext data, that is, map the plaintext data to a new and confidential state by using a homomorphic public key *pkᵢ*, so that only a receiver having a homomorphic private key *skᵢ* can obtain the plaintext data. Paillier homomorphic addition is a public key encryption system widely used in cryptography, which is proposed by Pascal Paillier in 1999. A main feature of Paillier homomorphic addition is that Paillier homomorphic addition has an additive homomorphic property, which means that two ciphertexts are given, and a ciphertext corresponding to the sum of plaintexts of the two ciphertexts can be calculated without decryption. Specifically, assume that there are two plaintexts m1 and m2, and Paillier ciphertexts of the two plaintexts m1 and m2 are respectively c1 and c2. The additive homomorphic property of Paillier can be used to calculate a product of c1 and c2 to obtain a new ciphertext c, which is exactly the ciphertext of the sum of m1 and m2. The additive homomorphic property is an important feature of a Paillier encryption algorithm. A simple representation is *E*(*m*₁) · *E*(*m*₂) = *E*(*m*₁ + *m*₂) , where point multiplication · is subsequent homomorphic addition ⊕. The homomorphic property can be completing calculation in a specific form on encrypted data without leaking original data.

In step S209, each service provider sends a transaction Tx2 calling the signature contract to the blockchain system to upload the homomorphic public key *pkᵢ*.

It can be understood that the transaction Tx2 indicates a transaction that is sent by each of the n service providers to the blockchain system for uploading the homomorphic public key *pkᵢ*, instead of a transaction sent by a certain service provider to the blockchain system.

The transaction Tx2 is sent by a blockchain account of the service provider. The transaction Tx2 includes Account1 and *pkᵢ*.

In step S211, the blockchain system executes the transaction Tx2, and pushes the homomorphic public key *pkᵢ* to the other service providers.

Each node in the blockchain system executes the transaction Tx2 after receiving the transaction Tx2 and completing consensus agreement on the transaction Tx2; determines, based on the transaction Tx2, whether a sender of the transaction Tx2 is an account in the accounts of the n service providers corresponding to Account1; and generates a receipt corresponding to the transaction Tx2 if yes, and stores a homomorphic public key corresponding to the service provider account sending the transaction Tx2 in the receipt in an event form to push the homomorphic public key of the service provider to another service provider; or ends execution of the transaction if not.

In addition, the blockchain system further maintains a quantity of received transactions Tx2 in a contract state of a contract C1 in association with Account1, and the quantity of received transactions Tx2 is increased by 1 in the contract state of the contract C1 when each transaction Tx2 is executed in the blockchain system.

In step S213, each time the blockchain system completes one transaction Tx2, the blockchain system determines, based on data in Table1 in the contract state of the contract C1, whether the transaction Tx2 has been received from the n service providers, and performs step S215 if yes, to generate a second start event k2 to push the second start event k2 to the n service providers and instruct each service provider to enter the second round of interaction in the key generation phase.

The second start event k2 can include respective homomorphic public keys *pkᵢ* of the n service providers, so that each service provider obtains homomorphic public keys *pkᵢ* of the other n-1 service providers.

In step S217, each of the n service providers generates a random secret value *xᵢ*, a public key shard *Xᵢ = g^{xi},* and random polynomials *fᵢ*(*z*) and *fᵢ*(*j*) of degree t.

Assume that a sum of the secret values *xᵢ* respectively generated by the service providers *Pᵢ* is *x,* that is, $x = {\sum }_{i = 1}^{n} {x}_{i}$; and a sum of the polynomials respectively generated by the service providers is *f*(*z*), that is, $f \left(z\right) = {\sum }_{i = 1}^{n} {f}_{i} \left(z\right)$.

Specifically, *fᵢ*(*z*) = *a*_{*i*0} + *a*_{*i*1}*z* + *a*_{*i*2}*z*² + ··· + *aᵢₜz*^{t}, where *a*_{*i*0} is a secret value set by *Pᵢ*, and is set to *xᵢ* here. A threshold here is t, and therefore, a degree of the polynomial is also t. i ranges from 1 to n.

Assume that a threshold is 2, and a total quantity of service providers is 7, that is, t=2, and n=7. There are 7 service providers in total: *P*₁, *P*₂, *P*₃, *P*₄*, P*₅, *P*₆, and *P*₇ respectively using respectively generated secret values *x*₁, *x*₂, *x*₃, *x*₄, *x*₅, *x*₆, and *x*₇ to construct polynomials.

*P*₁ generates a 2-degree (t=2) polynomial *f*₁(*z*) = *a*₁₀ + *a*₁₁*z* + *a*₁₂*z*², where *a*₁₀ is a secret *x*₁ that is set by *P*₁.

*P*₂ generates a 2-degree (t=2) polynomial *f*₂(*z*) = *a*₂₀ + *a*₂₁*z* + *a*₂₂*z*², where *a*₂₀ is a secret *x*₂ that is set by *P*₂.

*P*₃ generates a 2-degree (t=2) polynomial *f*₃(*z*) = *a*₃₀ + *a*₃₁*z* + *a*₃₂*z*², where *a*₃₀ is a secret *x*₃ that is set by *P*₃.

*P*₄ generates a 2-degree (t=2) polynomial *f*₄(*z*) = *a*₄₀ + *a*₄₁*z* + *a*₄₂*z*², where *a*₄₀ is a secret *x*₄ that is set by *P*₄.

*P*₅ generates a 2-degree (t=2) polynomial *f*₅(*z*) = *a*₅₀ + *a*₅₁*z* + *a*₅₂*z*², where *a*₅₀ is a secret *x*₅ that is set by *P*₅.

*P*₆ generates a 2-degree (t=2) polynomial *f*₆(*z*) = *a*₆₀ + *a*₆₁*z* + *a*₆₂*z*², where *a*₆₀ is a secret *x*₆ that is set by *P*₆.

*P*₇ generates a 2-degree (t=2) polynomial *f*₇(*z*) = *a*₇₀ + *a*₇₁*z* + *a*₇₂*z*², where *a*₇₀ is a secret *x*₇ that is set by *P*₇.

Further, each service provider *Pᵢ* can generate n secret shards *fᵢ*(*j*)*,* and j ranges from 1 to n. For example, the service provider *Pᵢ* generates coordinates of n points on a curve corresponding to a polynomial of the service provider as n secret shards.

Specifically, examples are as follows:
*P*₁ generates *s*₁₁ = *f*₁(1), *s*₁₂ = *f*₁(2), *s*₁₃ = *f*₁(3), *s*₁₄ = *f*₁(4), *s*₁₅ = *f*₁(5), s₁₆ = *f*₁(6), *s*₁₇ = *f*₁(7).
*P*₂ generates *s*₂₁ = *f*2(1), *s*₂₂ = *f*₂(2), *s*₂₃ = *f*2(3), *s*₂₄ = *f*₂(4), *s*₂₅ = *f*₂(5), *s*₂₆ = *f*₂(6), *s*₂₇ = *f*₂(7).
*P*₃ generates *s*₃₁ = *f*₃(1), *s*₃₂ = *f*₃(2), *s*₃₃ = *f*₃(3), *s*₃₄ = *f*₃(4), *s*₃₅ = *f*₃(5), *s*₃₆ = *f*₃(6), *s*₃₇ = *f*₃(7).
*P*₄ generates *s*₄₁ = *f*₄(1), *s*₄₂ = *f*₄(2), *s*₄₃ = *f*₄(3), *s*₄₄ = *f*₂(4), s₄₅ = *f*₄(5), *s*₄₆ = *f*₄(6), *s*₄₇ = *f*₄(7).
*P*₅ generates *s*₅₁ = *f*₅(1), *s*₅₂ = *f*₅(2), *s*₅₃ = *f*₅(3), *s*₅₄ = *f*₅(4), *s*₅₅ = *f*₅(5), *s*₅₆ = *f*₅(6), *s*₅₇ = *f*₅(7).
*P*₆ generates *s*₆₁ = *f*₆(1), *s*₆₂ = *f*₆(²), *s*₆₃ = *f*₆(3), *s*₆₄ = *f*₆(4), *s*₆₅ = *f*₆(5), *s*₆₆ = *f*₆(6), *s*₆₇ = *f*₆(7).
*P*₇ generates *s*₇₁ = *f*₇(1), *s*₇₂ = *f*₇(2), *s*₇₃ = *f*₇(3), *s*₇₄ = *f*₇(4), *s*₇₅ = *f*₇(5), *s*₇₆ = *f*₇(6), *s*₇₇ = *f*₇(7).

In step S219, each service provider sends a transaction Tx3 calling a signature contract to upload a public key shard and *fᵢ*(*j*) to the blockchain system, where j≠i.

The transaction Tx3 can include Account1 and the public key shard and *fᵢ*(*j*) of the service provider.

Specifically, *P*₁ retains *s*₁₁, and uploads *s*₁₂, *s*₁₃, *s*₁₄, *s*₁₅, *s*₁₇, *s*₁₇, and *X*₁ to the blockchain system through the transaction Tx3. *P*₁ can encrypt *s*₁₂ by using the homomorphic public key of *P*₂ and then upload it to the blockchain system for *P*₂ to use, can encrypt *s*₁₃ by using the homomorphic public key of *P*₃ and then upload it to the blockchain system for *P*₃ to use, can encrypt *s*₁₄ by using the homomorphic public key of *P*₄ and then upload it to the blockchain system for *P*₄ to use, can encrypt *s*₁₅ by using the homomorphic public key of *P*₅ and then upload it to the blockchain system for *P*₅ to use, can encrypt *s*₁₆ by using the homomorphic public key of *P*₆ and then upload it to the blockchain system for *P*₆ to use, and can encrypt *s*₁₇ by using the homomorphic public key of *P*₇ and then upload it to the blockchain system for *P*₇ to use.

*P*₂ retains *s*₂₂, and uploads *s*₂₁, *s*₂₃, *s*₂₄, *s*₂₅, *s*₂₆, *s*₂₇, and *X*₂ to the blockchain system.

*P*₃ retains *s*₃₃, and uploads *s*₃₁, *s*₃₂, *s*₃₄*, s*₃₅, *s*₃₆, *s*₃₇, and *X*₃ to the blockchain system.

*P*₄ retains s₄₄, and uploads *s*₄₄, *s*₄₂, *s*₄₃, *s*₄₅, *s*₄₆, *s*₄₇, and *X*₄ to the blockchain system.

*P*₅ retains *s*₅₅, and uploads *s*₅₁, *s*₅₂, *s*₅₃, *s*₅₄, *s*₅₆, *s*₅₇, and *X*₅ to the blockchain system.

*P*₆ retains *s*₆₆, and uploads *s*₆₁, *s*₆₂, *s*₆₃, *s*₆₄, *s*₆₅, *s*₆₇, and *X*₆ to the blockchain system.

*P*₇ retains *s*₇₇, and uploads *s*₇₁, *s*₇₂, *s*₇₃, *s*₇₄, *s*₇₅, *s*₇₆, and *X*₇ to the blockchain system.

In step S221, the blockchain system executes the transaction Tx3, and pushes the public key shard and *fᵢ*(*j*) of the service provider to the other service providers.

In the blockchain system, when the transaction Tx3 is executed, it is first determined whether a sender of the transaction Tx3 is one of the accounts of the n service providers corresponding to Account1, and a receipt of the transaction Tx3 is generated if yes, where the receipt includes an event, and Account1 and the public key shard and *fᵢ*(*j*) of the service provider are stored in association with the sender of the transaction Tx3 in the event.

In addition, each time the blockchain system executes the transaction Tx3, the blockchain system maintains a quantity of transactions Tx3 that have been received in the blockchain in the contract state of the contract C1.

In step S223, after completing one transaction Tx3 each time, the blockchain system maintains, based on the quantity of transactions Tx3 that have been received in the blockchain in the contract state of the contract C1, whether the transaction Tx3 has been received from the n service providers.

If yes, step S225 is performed, and a third start event k3 is sent to each of the n service providers to indicate the third round of interaction in the key generation phase. The event k3 can include Account1 and the public key shard and *fᵢ*(*j*) of each of the n service providers, where j≠i.

In step S227, each of the n service providers generates a signature public key and a private key shard *ωᵢ.*

After each service provider receives the event k3, each service provider *Pᵢ* can calculate a total public key X (i.e., the signature public key) based on a public key set {*Xᵢ*}_{*i*∈[1,*n*]} corresponding to each service provider, for example, by using the following formula: $X = {\prod }_{i = 1}^{n} {X}_{i} = {\prod }_{i = 1}^{n} {g}^{{x}_{i}} = {g}^{{x}_{1}} ⋅ {g}^{{x}_{2}} ⋅ … ⋅ {g}^{{x}_{n}} = {g}^{{x}_{1} + {x}_{2} + ⋯ + {x}_{n}} = {g}^{x}$

In addition, each service provider *Pⱼ* can obtain *fᵢ*(*j*) from the event k3. As such:
*P*₁ locally has secret shards *s*₁₁, *s*₂₁, *s*₃₁, *s*₄₁, *s*₅₁, *s*₆₁, and *s*₇₁ generated by different service providers.
*P*₂ locally has secret shards *s*₁₂, *s*₂₂, *s*₃₂, *s*₄₂, *s*₅₂, *s*₆₂, and *s*₇₂ generated by different service providers.
*P*₃ locally has secret shards *s*₁₃, *s*₂₃, *s*₃₃, *s*₄₃, *s*₅₃, *s*₆₃, and *s*₇₃ generated by different service providers.
*P*₄ locally has secret shards *s*₁₄, *s*₂₄, *s*₃₄, *s*₄₄, *s*₅₄, *s*₆₄, and *s*₇₄ generated by different service providers.
*P*₅ locally has secret shards *s*₁₅, *s*₂₅, *s*₃₅, *s*₄₅, *s*₅₅, *s*₆₅, and *s*₇₅ generated by different service providers.
*P*₆ locally has secret shards *s*₁₆, *s*₂₆, *s*₃₆, *s*₄₆, *s*₅₆, *s*₆₆, and *s*₇₆ generated by different service providers.
*P*₇ locally has secret shards *s*₁₇, *s*₂₇, *s*₃₇, *s*₄₇, *s*₅₇, *s*₆₇, and *s*₇₇ generated by different service providers.

Then, each service provider *Pᵢ* can summarize a secret shard *sᵢᵢ* retained by the service provider and a secret shard *sⱼᵢ* obtained from another service provider *Pⱼ* to obtain a secret shard sum as a private key shard of the service provider, and a summarization method is, for example, addition, for example, a sum ${ω}_{i} = {\sum }_{j = 1}^{n} {s}_{ji}$ of secret shards of the service provider *Pᵢ*. Specifically, examples are as follows:
The service provider *P*₁ can calculate that the private key shard *ω*₁ is *ω*₁ = *s*₁₁ + *s*₂₁ + *s*₃₁ + *s*₄₁ + *s*₅₁ + *s*₆₁ + *s*₇₁; the service provider *P*₂ can calculate that the private key shard *ω*₂ is *ω*₂ = *s*₁₂ + *s*₂₂ + *s*₃₂ + *s*₄₂ + *s*₅₂ + *s*₆₂ + *s*₇₂; the service provider *P*₃ can calculate that the private key shard *ω*₃ is *ω*₃ = *s*₁₃ + *s*₂₃ + *s*₃₃ + *s*₄₃ + *s*₅₃ + *s*₆₃ + *s*₇₃; the service provider *P*₄ can calculate that the private key shard *ω*₄ is *ω*₄ = *s*₁₄ + *s*₂₄ + *s*₃₄ + *s*₄₄ + *s*₅₄ + *s*₆₄ + *s*₇₄; the service provider *P*₅ can calculate that the private key shard *ω*₅ is *ω*₅ = *s*₁₅ + *s*₂₅ + *s*₃₅ + *s*₄₅ + *s*₅₅ + *s*₆₅ + *s*₇₅; the service provider *P*₆ can calculate that the private key shard *ω*₆ is *ω*₆ = *s*₁₆ + *s*₂₆ + *s*₃₆ + *s*₄₆ + *s*₅₆ + *s*₆₆ + *s*₇₆; and the service provider *P*₇ can calculate that the private key shard *ω*₇ is *ω*₇ = *s*₁₇ + *s*₂₇ + *s*₃₇ + *s*₄₇ + *s*₅₇ + *s*₆₇ + *s*₇₇.

It can be understood that, from steps S207 to S227, the n service providers exchange information based on the blockchain system, which is not limited in implementations of this specification. For example, the n service providers can also exchange information with another service provider through off-chain broadcasting. In an implementation, a common verification parameter *Aᵢₖ = aᵢₖG* corresponding to a polynomial of degree t can be exchanged between the n service providers, where *k* = 0,1, *..., t*; and is disclosed to each service provider. Details are as follows:
The service provider *P*₁ generates *A*₁*ₖ = a*₁*ₖG,* where *k* = 0,1, *...,t* = 2, including *A*₁₀ = *a*₁₀*G = s*₁₀*G*, *A*₁₁ = *a*₁₁*G*, and *A*₁₂ = *a*₁₂*G*, and broadcasts {*A*₁₀, *A*₁₁, *A*₁₂} to *P*₂, *P*₃, *P*₄, *P*₅, *P*₆, and *P*₇.

The service provider *P*₂ generates *A*₂*ₖ = a*₂*ₖG*, where *k* = 0,1, *... , t =* 2, including *A*₂₀ = *a*₂₀*G = s*₂₀*G*, *A*₂₁ = *a*₂₁*G*, and *A*₂₂ = *a*₂₂*G*, and broadcasts {*A*₂₀, *A*₂₁, *A*₂₂} to *P*₁, *P*₃, *P*₄, *P*₅, *P*₆, and *P*₇.

The service provider *P*₃ generates *A*₃*ₖ = a*₃*ₖG*, where *k* = 0,1, *... , t =* 2, including *A*₃₀ = *a*₃₀*G* = *s*₃₀*G*, *A*₃₁ = *a*₃₁*G*, and *A*₃₂ = *a*₃₂*G*, and broadcasts {*A*₃₀, *A*₃₁, *A*₃₂} to *P*₁, *P*₂, *P*₄, *P*₅, *P*₆, and *P*₇.

The service provider *P*₄ generates *A*₄*ₖ = a*₄*ₖG*, where *k* = 0,1, *..., t* = 2, including *A*₄₀ = *a*₄₀*G = s*₄₀*G*, *A*₄₁ *= a*₄₁*G*, and *A*₄₂ = *a*₄₂*G*, and broadcasts {*A*₄₀, *A*₄₁, *A*₄₂} to *P*₁, *P*₂, *P*₃, *P*₅, *P*₆, and *P*₇.

The service provider *P*₅ generates *A*_{5*k*} = *a*₅*ₖG*, where *k* = 0,1, *... , t* = 2, including *A*₅₀ = *a*₅₀*G* = *s*₅₀*G*, *A*₅₁ = *a*₅₁*G*, and *A*₅₂ = *a*₅₂*G*, and broadcasts {*A*₅₀, *A*₅₁, *A*₅₂} to *P*₁, *P*₂, *P*₃, *P*₄, *P*₆, and *P*₇.

The service provider *P*₆ generates *A*₆*ₖ = a*₆*ₖG*, where *k* = 0,1, *... , t* = 2, including *A*₆₀ = *a*₆₀*G = s*₆₀*G*, *A*₆₁ = *a*₆₁*G*, and *A*₆₂ = *a*₆₂*G*, and broadcasts {*A*₆₀, *A*₆₁, *A*₆₂} to *P*₁, *P*₂, *P*₃, *P*₄, *P*₅, and *P*₇.

The service provider *P*₇ generates *A*_{7*k*} = *a*₇*ₖG*, where *k* = 0,1, *... , t* = 2, including *A*₇₀ = *a*₇₀*G = s*₇₀*G*, *A*₇₁ = *a*₇₁*G*, and *A*₇₂ = *a*₇₂*G*, and broadcasts {*A*₇₀, *A*₇₁, *A*₇₂} to *P*₁, *P*₂, *P*₃, *P*₄, *P*₅, and *P*₆.

Each service provider *Pᵢ* can also verify, based on common verification parameters {*A*_{*j*0}, *A*_{*j*1}*,..., Aⱼₜ*} of *Pⱼ,* for example, by using the following formula, the secret shard *sⱼᵢ* sent by *Pⱼ*: ${s}_{ji} G = {A}_{j 0} + {iA}_{j 1} + ⋯ + {i}^{t} {A}_{jt}$

Details are as follows:
The service provider *P*₁ verifies *s*₂₁ by using *s*₂₁*G* = *A*₂₀ + *A*₂₁ + *A*₂₂, verifies *s*₃₁ by using *s*₃₁*G* = *A*₃₀ + *A*₃₁ + *A*₃₂, verifies *s*₄₁ by using *s*₄₁*G* = *A*₄₀ + *A*₂₁ + *A*₄₂, verifies *s*₅₁ by using *s*₅₁*G* = *A*₅₀ + *A*₅₁ + *A*₅₂, verifies *s*₆₁ by using *s*₆₁*G* = *A*₆₀ + *A*₆₁ + *A*₆₂, and verifies *s*₇₁ by using *s*₇₁*G = A*₇₀ + *A*₇₁ + *A*₇₂*.*

The service provider *P*₂ verifies *s*₁₂ by using *s*₁₂*G* = *A*₁₀ + 2*A*₁₁ + 2²*A*₁₂, verifies *s*₃₂ by using *s*₃₂*G* = *A*₃₀ + 2*A*₃₁ + 2²*A*₃₂, verifies *s*₄₂ by using *s*₄₂*G = A*₄₀ *+* 2*A*₂₁ + 2²*A*₄₂, verifies *s*₅₂ by using *s*_{S2}G = *A*₅₀ + 2*A*₅₁ + 2²*A*₅₂, verifies *s*₆₂ by using *s*₆₂*G* = *A*₆₀ + 2*A*₆₁ + 2²*A*₆₂, and verifies *s*₇₂ by using *s*₇₂*G = A*₇₀ + 2*A*₇₁ + 2²*A*₇₂.

The service provider *P*₃ verifies *s*₁₃ by using *s*₁₃*G* = *A*₁₀ + 3*A*₁₁ + 3²*A*₁₂, verifies *s*₂₃ by using *s*₂₃*G* = *A*₃₀ + 3*A*₃₁ + 3²*A*₃₂, verifies *s*₄₃ by using *s*₄₃*G* = *A*₄₀ + 3*A*₂₁ + 3²*A*₄₂, verifies *s*₅₃ by using *s*₅₃*G* = *A*₅₀ + 3*A*₅₁ + 3²*A*₅₂, verifies *s*₆₃ by using *s*₆₃*G* = *A*₆₀ + 3*A*₆₁ *+* 3²*A*₆₂, and verifies *s*₇₃ by using *s*₇₃*G = A*₇₀ + 3*A*₇₁ + 3²*A*₇₂.

The service provider *P*₄ verifies *s*₁₄ by using *s*₁₄*G* = *A*₁₀ + 4*A*₁₁ + 4²*A*₁₂, verifies *s*₂₄ by using *s*₂₄*G* = *A*₂₀ + 4*A*₂₁ + 4²*A*₂₂, verifies *s*₃₄ by using *s*₃₄*G* = *A*₄₀ + 4*A*₂₁ + 4²*A*₄₂, verifies *s*₅₄ by using *s*₅₄*G* = *A*₅₀ + 4*A*₅₁ + 4²*A*₅₂, verifies *s*₆₄ by using *s*₆₄*G* = *A*₆₀ + 4*A*₆₁ + 4²*A*₆₂, and verifies *s*₇₄ by using *s*₇₄*G* = *A*₇₀ + 4*A*₇₁ + 4²*A*₇₂.

The service provider *P*₅ verifies *s*₁₅ by using *s*₁₅G = *A*₁₀ + 5*A*₁₁ + 5²*A*₁₂, verifies *s*₂₅ by using *s*₂₅*G* = *A*₂₀ + 5*A*₂₁ + 5²*A*₂₂, verifies *s*₃₅ by using *s*₃₅*G* = *A*₃₀ + 5*A*₃₁ + 5²*A*₃₂, verifies *s*₄₅ by using *s*₄₅*G* = *A*₄₀ + 5*A*₄₁ + 5²*A*₄₂, verifies *s*₆₅ by using *s*₆₅*G* = *A*₆₀ + 5*A*₆₁ *+* 5²*A*₆₂, and verifies *s*₇₅ by using *s*₇₅*G* = *A*₇₀ + 5*A*₇₁ + 5²*A*₇₂.

The service provider *P*₆ verifies *s*₁₆ by using *s*₁₆*G* = *A*₁₀ + 6*A*₁₁ + 6²*A*₁₂, verifies *s*₂₆ by using *s*₂₆*G = A*₂₀ *+* 6*A*₂₁ + 6²*A*₂₂ , verifies *s*₃₆ by using *s*₃₆*G* = *A*₃₀ + 56 + 6²*A*₃₂ *,* verifies *s*₄₆ by using *s*₄₆*G = A*₄₀ + 6*A*₄₁ + 6²*A*₄₂, verifies *s*₅₆ by using *s*_{S6}*G* = A₅₀ + 6*A*₅₁ + 6²*A*₅₂, and verifies *s*₇₆ by using *s*₇₆*G = A*₆₀ + 6*A*₇₁ + 6²*A*₇₂*.*

The service provider *P*₇ verifies *s*₁₇ by using *s*₁₇*G* = *A*₁₀ + 7*A*₁₁ + 7²*A*₁₂, verifies *s*₂₇ by using *s*₂₇*G = A*₂₀ + 7*A*₂₁ + 7²*A*₂₂, verifies *s*₃₇ by using *s*₃₇*G* = *A*₃₀ + 7*A*₃₁ + 7²*A*₃₂, verifies *s*₄₇ by using *s*₄₇*G = A*₄₀ + 7*A*₄₁ + 7²*A*₄₂, verifies *s*₅₇ by using *s*₅₇*G* = *A*₅₀ + 7*A*₅₁ + 7²*A*₅₂, and verifies *s*₆₇ by using *s*₆₇*G* = *A*₆₀ + 7*A*₆₁ + 7²*A*₆₂.

Any party can terminate a protocol if verification fails.

In step S229, each service provider sends a transaction Tx4 calling the signature contract to the blockchain system to upload the signature public key.

The transaction Tx4 can include Account1 and the signature public key generated by the service provider.

In step S231, the transaction Tx4 is executed in the blockchain system, and in the blockchain system, the signature public key calculated by each service provider is stored in association with the account of the service provider in the row of Account1 in Table1 in the contract state of the signature contract.

In step S233, each time the blockchain system executes the transaction Tx4, the blockchain system determines whether n signature public keys respectively corresponding to the accounts of the n service providers have been received, determines whether the n signature public keys are consistent if yes, and performs step S235 if yes.

In step S235, when it is determined that the n signature public keys are consistent, the signature public key is stored in a signature public key field in the row of Account1 in Table1, and it is determined that the key generation phase is completed.

After the above-mentioned key generation phase is performed, in the contract state of the signature contract, the signature public key is stored in association with Account1, and each of the n service providers corresponding to Account1 stores a private key shard *ωᵢ.*

It can be understood that steps S203 to S235 in FIG. 2 (i.e., the steps included in dashed line boxes in FIG. 2) show an example of a process in which the blockchain system interacts with the n service providers based on the DKG protocol to generate a distributed key. Implementations of this specification are not limited to generating the distributed key by performing steps S203 to S235 in FIG. 2. For example, the n service providers can alternatively exchange data (e.g., a homomorphic public key or a public key shard) through off-chain interaction. Implementations are not limited here.

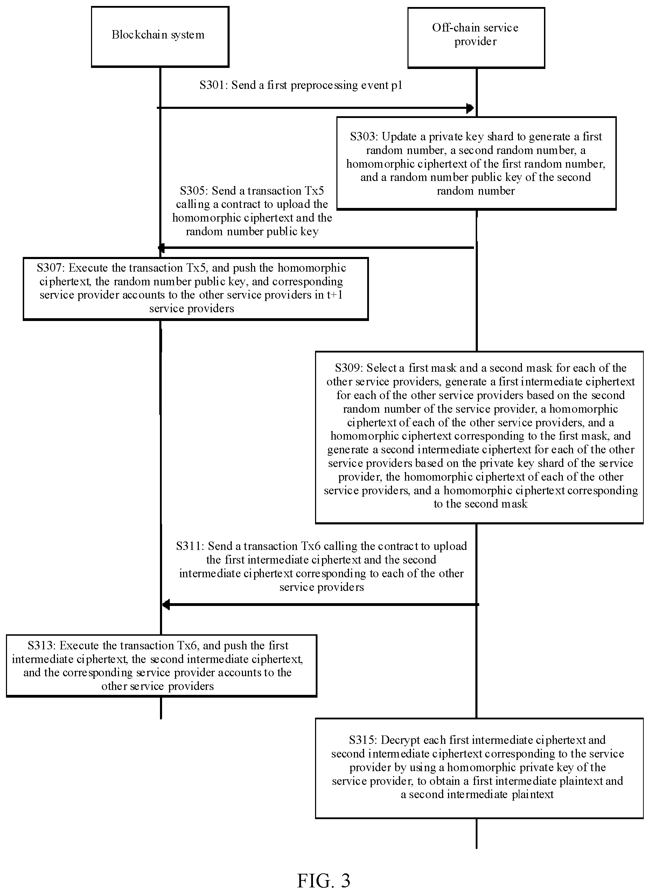

FIG. 3 is a flowchart illustrating a preprocessing phase in distributed threshold signing, according to an implementation of this specification.

In step S301, in response to completion of the key generation phase corresponding to Account1, the blockchain system separately pushes a preprocessing event to the n off-chain service providers, where the preprocessing event includes Account1, to instruct the n service providers to enter a preprocessing phase corresponding to Account1.

In step S303, each of the t+1 service providers updates a private key shard to generate a first random number *kᵢ*, a second random number *γᵢ*, a homomorphic ciphertext of the first random number *kᵢ*, and a random number public key of the second random number *γᵢ*.

In one implementation, the blockchain system can select several groups of service providers from the n service providers for preprocessing, or the n service providers can determine several groups of service providers through negotiation for preprocessing. Each group of service providers includes at least t+1 service providers. A group of service providers including t+1 service providers is used as an example in the following descriptions.

For each group of service providers, each service provider in the group performs the following operations:
Each of the t+1 service providers can calculate a Lagrange coefficient ${l}_{i} \left(0\right) = {\prod }_{1 \leq m \leq t + 1 , m \neq i} \frac{{P}_{m}}{{P}_{m} - {P}_{i}}$ , and update the private key shard of the service provider by using the Lagrange coefficient, to obtain an updated private key shard ${x}_{i}^{′} ← {l}_{i} \left(0\right) ⋅ {ω}_{i}$*.* Here, for example, if i is 1, 2, or 3: the service provider *P*₁ calculates the Lagrange coefficient ${l}_{1} \left(0\right) = {\prod }_{1 \leq m \leq t + 1 , m \neq 1} \frac{{P}_{m}}{{P}_{m} - {P}_{i}} = {\prod }_{1 \leq m \leq 3 , m \neq 1} \frac{m}{m - 1} = \frac{2}{2 - 1} ⋅ \frac{3}{3 - 1} = 3$ , and updates the private key shard of the service provider to obtain ${x}_{1}^{′} ← {l}_{1} \left(0\right) ⋅ {ω}_{1}$; the service provider *P*₂ calculates the Lagrange coefficient ${l}_{2} \left(0\right) = {\prod }_{1 \leq m \leq t + 1 , m \neq 2} \frac{{P}_{m}}{{P}_{m} - {P}_{i}} = {\prod }_{1 \leq m \leq 3 , m \neq 2} \frac{m}{m - 2} = \frac{1}{1 - 2} ⋅ \frac{3}{3 - 2} = - 3$, and updates the private key shard of the service provider to obtain ${x}_{2}^{′} ← {l}_{2} \left(0\right) ⋅ {ω}_{2}$; and the service provider *P*₃ calculates the Lagrange coefficient ${l}_{3} \left(0\right) = {\prod }_{1 \leq m \leq t + 1 , m \neq 3} \frac{{P}_{m}}{{P}_{m} - {P}_{i}} = {\prod }_{1 \leq m \leq 3 , m \neq 3} \frac{m}{m - 3} = \frac{1}{1 - 3} ⋅ \frac{2}{2 - 3} = 1$ , and updates the private key shard of the service provider to obtain ${x}_{3}^{′} ← {l}_{3} \left(0\right) ⋅ {ω}_{3}$. $x = {\sum }_{i = 1}^{n} {x}_{i} = {\sum }_{i = 1}^{3} {l}_{i} \left(0\right) {ω}_{i}^{′} = {\sum }_{i = 1}^{3} {x}_{i}^{′}$ can be obtained according to the above-mentioned Lagrange interpolation method.

In addition, each of the t+1 service providers generates the first random number *kᵢ* and the second random number *γᵢ*, and generates the homomorphic ciphertext *Kᵢ = encᵢ*(*kᵢ*) of the first random number *kᵢ* and the random number public key *Γᵢ = g^{γi}* of the second random number *γᵢ*. It is defined that $k = {\sum }_{i = 1}^{t + 1} {k}_{i}$, and $γ = {\sum }_{i = 1}^{n + 1} {γ}_{i}$. Each of the t+1 service providers can provide *Kᵢ* and *Γᵢ* to the other service providers in the t+1 service providers through broadcasting or uploading to the blockchain system. The following provides example descriptions of a blockchain uploading method.

In step S305, each service provider sends a transaction Tx5 calling the contract C1 to the blockchain system to upload the homomorphic ciphertext of the random number kᵢ and the random number public key of the random number γᵢ.

In step S307, the blockchain system executes the transaction Tx5 to generate an event including the homomorphic ciphertext of the random number kᵢ and the random number public key of the random number γᵢ of each service provider. In the blockchain system, for example, the event is stored in a form of a receipt to be pushed to the other service providers in the t+1 service providers.

In step S309, each service provider *Pᵢ* in the t+1 service providers selects a first mask and a second mask for each of the other service providers, generates a first intermediate ciphertext for the other service providers based on the second random number of the service provider, a homomorphic ciphertext of the other service providers, and a homomorphic ciphertext corresponding to the first mask, and generates a second intermediate ciphertext for the other service providers based on the private key shard of the service provider, the homomorphic ciphertext of the other service providers, and a homomorphic ciphertext corresponding to the second mask.

Each service provider *Pᵢ* in the t+1 service providers generates multiple first masks ${β}_{i , j} ∈ {ℤ}_{p}$ for the other service providers in the group, and generates, based on the following formula, t first intermediate ciphertexts *D_{i,j}* corresponding to the other t service providers: for example, performs encryption and calculation of *D_{i,j} = γᵢ* ⊙ *Kⱼ* ⊕ *encⱼ*(*-β_{i,j}*) *= encⱼ*(*γᵢ · kⱼ - β_{i,j}*) by using Paillier, where *encⱼ* indicates that the ciphertext corresponds to a homomorphic public key of the service provider *Pⱼ*. The service provider *Pᵢ* can provide the t first intermediate ciphertexts *D_{i,j}* for the other t service providers through broadcasting or uploading to the blockchain system.

Each service provider *Pᵢ* in the t+1 service providers further generates multiple second masks ${\hat{β}}_{i , j} ∈ {ℤ}_{p}$ for the other service providers in the group, and generates, based on the following formula, t second intermediate ciphertexts *D̂_{i,j}* corresponding to the other t service providers: for example, performs encryption and calculation of ${\hat{D}}_{i , j} = {x}_{i} ⊙ {K}_{j} ⊕ {enc}_{j} \left(-{\hat{β}}_{i , j}\right) = {enc}_{j} \left({x}_{i}^{′}⋅{k}_{j}-{\hat{β}}_{i , j}\right)$ by using Paillier, where *encⱼ* indicates that the ciphertext corresponds to a homomorphic public key of the service provider *Pⱼ*. The service provider *Pᵢ* can provide the t second intermediate ciphertexts *D̂_{i,j}* for the other t service providers through broadcasting or uploading to the blockchain system.

In step S311, each service provider sends a transaction Tx6 calling the contract to the blockchain system to upload the first intermediate ciphertext and the second intermediate ciphertext corresponding to each of the other service providers.

In step S313, the blockchain system executes the transaction Tx6 to generate an event, where the event includes Account1, and the first intermediate ciphertext and the second intermediate ciphertext corresponding to an account of each of the other service providers.

In step S315, the account of each service provider decrypts each first intermediate ciphertext and second intermediate ciphertext corresponding to the account by using a homomorphic private key of the account, to obtain a first intermediate plaintext and a second intermediate plaintext.

After receiving a first intermediate ciphertext *D_{j,i} = encᵢ*(*γⱼ · kᵢ - β_{j,i}*) provided by another service provider *Pⱼ*, the service provider *Pᵢ* decrypts each first intermediate ciphertext by using the homomorphic private key of the service provider, to obtain multiple first intermediate plaintexts *α_{i,j} = γⱼ · kᵢ - β_{j,i}.* After receiving a second intermediate ciphertext ${\hat{D}}_{j , i} = {enc}_{i} \left({x}_{j}^{′}⋅{k}_{i}-{\hat{β}}_{j , i}\right)$ provided by the another service provider *Pⱼ*, the service provider *Pᵢ* decrypts each second intermediate ciphertext by using the homomorphic private key of the service provider, to obtain multiple second intermediate plaintexts ${\hat{α}}_{i , j} = {x}_{j}^{′} ⋅ {k}_{i} - {\hat{β}}_{j , i}$*.*

For example, a service provider *P*₁ is used as an example:
*P*₁ randomly selects a first mask *β*_{1,2} for one service provider, i.e., *P*₂, performs Paillier encryption and calculates a first intermediate ciphertext *D*_{1,2} = *γ*₁ ⊙ *K*₂ ⊕ *E*₂(-*β*_{1,2}) = *enc*₂(*γ*₁ *· k*₂ - *β*_{1,2}) , and provides *D*_{1,2} for *P*₂ through broadcasting or uploading to the blockchain system. Similarly, *P*₁ randomly selects a first mask *β*_{1,3} for one service provider, i.e., *P*₃, calculates a first intermediate ciphertext *D*_{1,3} = *γ*₁ ⊙ *K*₃ ⊕ *E*₃(-*β*_{1,3}) = *enc*₃(*γ*₁ *· k*₃ - *β*_{1,3}), and provides *D*_{1,3} for *P*₃ through broadcasting or uploading to the blockchain system. Similarly, *P*₁ can generate a first intermediate ciphertext for another service provider. Details are omitted here for simplicity.

*P*₂ randomly selects a first mask *β*_{2,1} for one service provider, i.e., *P*₁, performs Paillier encryption and calculates a first intermediate ciphertext *D*_{2,1} *= γ*₂ ⊙ *K*₁ ⊕ *E*₁(-*β*_{2,1}) = *enc*₁(*γ*₂ *· k*₁ - *β*_{2,1}) , and provides *D*_{2,1} for *P*₁ through broadcasting or uploading to the blockchain system. Similarly, *P*₂ randomly selects a first mask *β*_{2,3} for one service provider, i.e., *P*₃ , calculates a first intermediate ciphertext *D*_{2,3} *= γ*₂ ⊙ *K*₃ ⊕ *E*₃(-*β*_{2,3}) = *enc*₃(γ₂ *· k*₃ *- β*_{2,3}), and provides *D*_{2,3} for *P*₃ through broadcasting or uploading to the blockchain system.

*P*₃ randomly selects a first mask *β*_{3,1} for one service provider, i.e., *P*₁, performs Paillier encryption and calculates a first intermediate ciphertext *D*_{3,1} *= γ*₃ ⊙ *K*₁ ⊕ *E*₁(*-β*_{3,1}) = *enc*₁(*γ*₃ *· k*₁ - *β*_{3,1}) , and provides *D*_{3,1} for *P*₁ through broadcasting or uploading to the blockchain system. Similarly, *P*₃ randomly selects a first mask *β*_{3,2} for one service provider, i.e., *P*₂ , calculates a first intermediate ciphertext *D*_{3,2} *= γ*₃ ⊙ ⊕ *E*₂(-*β*_{3,2}) = *enc*₃(γ₃ *· k*₂ *- β*_{3,2}), and provides *D*_{3.2} for *P*₂ through broadcasting or uploading to the blockchain system.

As such, *P*₁ can receive *D*_{2,1} and *D*_{3,1}, so that *P*₁ can obtain the first intermediate plaintexts *γ*₂ · *k*₁ - *β*_{2,1} = *α*_{1,2}, *γ*₃ *· k*₁ - *β*_{3,1} = *α*_{1,3}, etc. through decryption.

One preprocessing process ends after step S315 is completed. The blockchain system can further determine, based on the above-mentioned parameters min and max, whether to repeat the preprocessing process shown in FIG. 3. After completing the above-mentioned transaction Tx6, the blockchain system determines, based on a quantity of preprocessing processes maintained in the contract state, whether a current quantity of preprocessing processes reaches max, and performs the preprocessing process shown in FIG. 3 again if not, or determines that the preprocessing phase ends if yes.

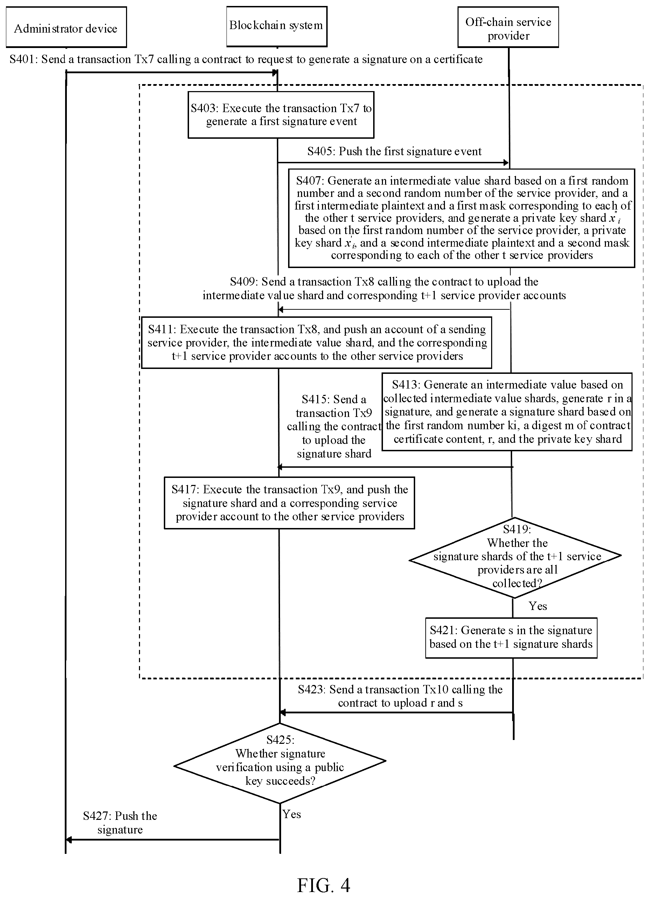

FIG. 4 is a flowchart illustrating a signing phase in distributed threshold signing, according to an implementation of this specification.

As shown in FIG. 4, in step S401, the administrator device sends a transaction Tx7 calling the signature contract to the blockchain system to request to generate a signature on certificate content of the CA contract, where a sender of the transaction Tx7 is Account1.

The certificate can be a root CA or an intermediate CA of the CA contract. When the CA contract uses a self-signed root CA mode, the administrator device generates root CA certificate content, extracts a digest (e.g., a hash value) of the certificate content, and places the digest in the transaction Tx7 to request a signature on the certificate content. The certificate content can include description information, public key information, validity period information, etc. of the CA contract, and the public key information includes a public key that is stored in the signature contract and that currently corresponds to Account1. When the CA contract uses an intermediate CA mode, the administrator device generates a certificate signing request (CSR), extracts a digest of the CSR, and places the digest in the transaction Tx7 to request a signature on the CSR. The CSR can include description information, public key information, etc. of the CA contract.

In step S403, the blockchain system executes the transaction Tx7 to generate a first signature event.

When executing the transaction Tx7, the blockchain system reads Table1 from the contract state of the contract C1 to determine whether there is a row corresponding to Account1 in Table1; and permission verification succeeds if yes; otherwise, it is determined that the transaction has no permission to obtain a signature.

After permission verification succeeds, each node in the blockchain system executes the transaction Tx7, generates the first signature event, and stores the first signature event in a form of a receipt of the transaction Tx7 in the blockchain to be pushed to each service provider. The first signature event includes Account1, a target message (that is, the CA contract certificate content), and a specific topic (e.g., "sign1").

In step S405, the blockchain system pushes the first signature event to each service provider in response to event subscription of each service provider.

The n service providers can negotiate to have several groups of service providers enter the signing phase, and each group of service providers includes t+1 service providers in the n service providers. The several groups of service providers can subscribe to an event with a topic like "sign1" to one or more nodes in the blockchain system, and the one or more nodes push the receipt to these subscribed service providers when determining that the receipt of the transaction Tx7 includes the event with the topic "sign1". The following uses one group of service providers as an example for description.

In step S407, each of the t+1 service providers generates an intermediate value shard based on a first random number and a second random number of the service provider, and a first intermediate plaintext and a first mask corresponding to each of the other t service providers, and generates a private key shard ${x}_{i}^{"}$ based on the first random number of the service provider, a private key shard ${x}_{i}^{′}$, and a second intermediate plaintext and a second mask corresponding to each of the other t service providers.

Each service provider *Pᵢ* can calculate the intermediate value shard *δᵢ* by using the following formula: ${δ}_{i} = {γ}_{i} ⋅ {k}_{i} + {\sum }_{j = 1 , j \neq i}^{t + 1} \left({α}_{i , j}+{β}_{i , j}\right)$

For example, t=2. Assume that a group of service providers selected by the blockchain system includes *P*₁ to *P*₃. For the service providers *P*₁ to *P*₃:
*P*₁ randomly selects a first mask *β*_{1,2} for one service provider, i.e., *P*₂, performs Paillier encryption and calculates a first intermediate ciphertext *D*_{1,2} = *γ*₁ ⊙ *K*₂ ⊕ *E*₂(-*β*_{1,2}) = *enc*₂(*γ*₁ *· k*₂ - *β*_{1,2}) , and provides *D*_{1,2} for *P*₂ through broadcasting or uploading to the blockchain system. Similarly, *P*₁ randomly selects a first mask *β*_{1,3} for one service provider, i.e., *P*₃, calculates a first intermediate ciphertext *D*_{1,3} = *γ*₁ ⊙ *K*₃ ⊕ *E*₃(-*β*_{1,3}) = *enc*₃(γ₁ *· k*₃ - *β*_{1,3}), and provides *D*_{1,3} for *P*₃ through broadcasting or uploading to the blockchain system.

*P*₂ randomly selects a first mask *β*_{2,1} for one service provider, i.e., *P*₁, performs Paillier encryption and calculates a first intermediate ciphertext *D*_{2,1} *= γ*₂ ⊙ *K*₁ ⊕ *E*₁(-*β*_{2,1}) = *enc*₁(*γ*₂ *· k*₁ - *β*_{2,1}) , and provides *D*_{2,1} for *P*₁ through broadcasting or uploading to the blockchain system. Similarly, *P*₂ randomly selects a first mask *β*_{2,3} for one service provider, i.e., *P*₃ , calculates a first intermediate ciphertext *D*_{2,3} *= γ*₂ ⊙ *K*₃ ⊕ *E*₃(-*β*_{2,3}) = *enc*₃(γ₂ *· k*₃ *- β*_{2,3}), and provides *D*_{2,3} for *P*₃ through broadcasting or uploading to the blockchain system.

*P*₃ randomly selects a first mask *β*_{3,1} for one service provider, i.e., *P*₁, performs Paillier encryption and calculates a first intermediate ciphertext *D*_{3,1} = *γ*₃ ⊙ *K*₁ ⊕ *E*₁(-*β*_{3,1}) = *enc*₁(*γ*₃ · *k*₁ *- β*_{3,1}) , and provides *D*_{3,1} for *P*₁ through broadcasting or uploading to the blockchain system. Similarly, *P*₃ randomly selects a first mask *β*_{3,2} for one service provider, i.e., *P*₂ , calculates a first intermediate ciphertext *D*_{3,2} = *γ*₃ ⊙ *K*₂ ⊕ *E*₂(-*β*_{3,2}) = *enc*₃(*γ*₃ *· k*₂ *- β*_{3,2}), and provides *D*_{3.2} for *P*₂ through broadcasting or uploading to the blockchain system.

As such, *P*₁ can receive *D*_{2,1} and *D*_{3,1}, so that *P*₁ can obtain *γ*₂ *· k*₁ - *β*_{2,1} = *α*_{1,2} and *γ*₃ *· k*₁ *- β*_{3,1} = *α*_{1,3} through decryption, and *P*₁ can calculate that the intermediate value shard is ${δ}_{1} = {γ}_{1} ⋅ {k}_{1} + {\sum }_{j = 2}^{3} \left({α}_{i , j}+{β}_{i , j}\right) = {γ}_{1} ⋅ {k}_{1} + \left({α}_{1 , 2}+{β}_{1 , 2}+{α}_{1 , 3}+{β}_{1 , 3}\right) = {γ}_{1} ⋅ {k}_{1} + \left({γ}_{2}⋅{k}_{1}-\right.$ $\left.{β}_{2 , 1}+{β}_{1 , 2}+{γ}_{3}⋅{k}_{1}-{β}_{3 , 1}+{β}_{1 , 3}\right)$.

Similarly, *P*₂ can receive *D*_{1,2} and *D*_{3,2}, so that *P*₂ can obtain *γ*₁ · *k*₂ - *β*_{1,2} = *α*_{2,1} and *γ*₃ *· k*₂ - *β*_{3,2} = *α*_{2,3} through decryption, and *P*₂ can calculate that the intermediate value shard is ${δ}_{2} = {γ}_{2} ⋅ {k}_{2} + {\sum }_{j = 1 , j \neq 2}^{3} \left({α}_{i , j}+{β}_{i , j}\right) = {γ}_{2} ⋅ {k}_{2} + \left({α}_{2 , 1}+{β}_{2 , 1}+{α}_{2 , 3}+{β}_{2 , 3}\right) = {γ}_{2} ⋅ {k}_{2} + \left({γ}_{1}⋅\right.$ $\left.{k}_{2}-{β}_{1 , 2}+{β}_{2 , 1}+{γ}_{3}⋅{k}_{2}-{β}_{3 , 2}+{β}_{2 , 3}\right)$.

*P*₃ can receive *D*_{1,3} and *D*_{2,3}, so that *P*₃ can obtain *γ*₁ · *k*₃ - *β*_{1,3} = *α*_{3,1} and *γ*₂ · *k*₃ *- β*_{2,3} = *α*_{3,2} through decryption, and *P*₃ can calculate that the intermediate value shard is ${δ}_{3} = {γ}_{3} ⋅$ ${k}_{3} + {\sum }_{j = 1}^{2} \left({α}_{i , j}+{β}_{i , j}\right) = {γ}_{3} ⋅ {k}_{3} + \left({α}_{3 , 1}+{β}_{3 , 1}+{α}_{3 , 2}+{β}_{3 , 2}\right) = {γ}_{3} ⋅ {k}_{3} + \left({γ}_{1}⋅\right. {k}_{3} - {β}_{1 , 3} +$ $\left.{β}_{3 , 1}+{γ}_{2}⋅{k}_{3}-{β}_{2 , 3}+{β}_{3 , 2}\right)$.

Each service provider *Pᵢ* can update the private key shard again by using the following formula to obtain the following: ${x}_{i}^{"} = {x}_{i}^{′} ⋅ {k}_{i} + {\sum }_{j = 1 , j \neq i}^{t + 1} \left({\hat{α}}_{i , j}+{\hat{β}}_{i , j}\right)$

In step S409, each of the t+1 service providers sends a transaction Tx8 calling the contract C1 to the blockchain system to upload the intermediate value shard and corresponding t+1 service provider accounts.

In step S411, the blockchain system executes the transaction Tx8, and pushes an account of a sending service provider, the intermediate value shard, and the corresponding t+1 service provider accounts to the other service providers.

Specifically, in the blockchain system, an event including the account of the sending service provider, the intermediate value shard, and the corresponding t+1 service provider accounts is generated by executing the transaction Tx8, and as described above, the event is pushed to each service provider in response to subscription of each service provider to the event.

In step S413, each service provider generates an intermediate value based on the collected intermediate value shards, generates r in a signature, and generates a signature shard based on the first random number kᵢ, a to-be-signed message digest m, r, and the private key shard.

Specifically, for the t+1 service providers selected by the blockchain system, after receiving *δᵢ* of the other t service providers, the service provider *Pᵢ* can obtain the intermediate value *δ* by summing up t+1 *δᵢ* by using the following formula: $δ = {\sum }_{i = 1}^{t + 1} {δ}_{i}$

The following can be easily verified: $δ = {\sum }_{i = 1}^{t + 1} {δ}_{i} = kγ$.

For example, t=2. $\begin{matrix}δ = {δ}_{1} + {δ}_{2} + {δ}_{3} \\ = {γ}_{1} ⋅ {k}_{1} + \left({γ}_{2}⋅{k}_{1}-{β}_{2 , 1}+{β}_{1 , 2}+{γ}_{3}⋅{k}_{1}-{β}_{3 , 1}+{β}_{1 , 3}\right) + {γ}_{2} ⋅ {k}_{2} \\ + \left({γ}_{1}⋅{k}_{2}-{β}_{1 , 2}+{β}_{2 , 1}+{γ}_{3}⋅{k}_{2}-{β}_{3 , 2}+{β}_{2 , 3}\right) + {γ}_{3} ⋅ {k}_{3} \\ + \left({γ}_{1}⋅{k}_{3}-{β}_{1 , 3}+{β}_{3 , 1}+{γ}_{2}⋅{k}_{3}-{β}_{2 , 3}+{β}_{3 , 2}\right) \\ = {γ}_{1} ⋅ {k}_{1} + {γ}_{2} ⋅ {k}_{1} + {γ}_{3} ⋅ {k}_{1} + {γ}_{2} ⋅ {k}_{2} + {γ}_{1} ⋅ {k}_{2} + {γ}_{3} ⋅ {k}_{2} + {γ}_{3} ⋅ {k}_{3} + {γ}_{1} ⋅ {k}_{3} + {γ}_{2} \\ ⋅ {k}_{3} \\ = \left({k}_{1}+{k}_{2}+{k}_{3}\right) \left({γ}_{1}+{γ}_{2}+{γ}_{3}\right) = kγ\end{matrix}$

Then, the service provider can perform the following calculation to generate r in the signature: $\begin{matrix}R = {\left({\prod }_{j = 1}^{t + 1} {Γ}_{j}\right)}^{{δ}^{- 1}} \\ = {\left({g}^{\left({\sum }_{j ∈ \left[t+1\right]} {γ}_{j}\right)}\right)}^{{\left(kγ\right)}^{- 1}} \\ = {\left({g}^{γ}\right)}^{{\left(kγ\right)}^{- 1}} \\ = {g}^{{k}^{- 1}} = \left(a1,a2\right)\end{matrix}$

(a1, a2) is coordinates of a point R, so that r=a1 can be obtained.

Then, the service provider Pᵢ generates the signature shard ${σ}_{i} = {k}_{i} m + {x}_{i}^{"} r$ based on the first random number *kᵢ* of the service provider, the digest m of the target message, r, and the private key shard ${x}_{i}^{"}$ of the service provider.

In step S415, each service provider Pᵢ in the t+1 service providers sends a transaction Tx9 calling the contract to the blockchain system to upload the signature shard *σᵢ*, where the transaction includes corresponding Account1.

In step S417, the blockchain system executes the transaction Tx9 to generate an event including the signature shard and the corresponding service provider account, stores the event in the blockchain system, and pushes the event to each of the other service providers in response to subscription of each of the other service providers to the event.

In step S419, each service provider determines whether the signature shards of the t+1 service providers are all collected.

Each service provider can periodically determine whether the signature shards of the t+1 service providers are all collected, or after a predetermined time at the start of the signing phase, determine whether the signature shards of the at least t+1 service providers are all collected.

Step S421 is performed to generate s in the signature based on the t+1 (or at least t+1) signature shards if yes.

Details are as follows: $\begin{matrix}s = {\sum }_{j ∈ \left[1,t+1\right]} {σ}_{i} = {\sum }_{j ∈ \left[1,t+1\right]} \left({k}_{i}H\left(m\right)+{x}_{i}^{"}r\right) = {\sum }_{j ∈ \left[1,t+1\right]} {k}_{i} H \left(m\right) + {\sum }_{j ∈ \left[1,t+1\right]} {x}_{i}^{"} r \\ = \left({k}_{1}+{k}_{2}+⋯+{k}_{t + 1}\right) ⋅ H \left(m\right) + \left({k}_{1}+{k}_{2}+⋯+{k}_{t + 1}\right) ⋅ \left(\begin{matrix}{x}_{1}^{′} + {x}_{2}^{′} + \\ ⋯ + {x}_{t + 1}^{′}\end{matrix}\right) ⋅ r = k ⋅ H \left(m\right) + k ⋅ x ⋅ r ,\end{matrix}$ wherein $\begin{matrix}{\sum }_{i = 1}^{t + 1} {x}_{i}^{"} = {\sum }_{i = 1}^{t + 1} \left({x}_{i}^{′}{k}_{i}+{\sum }_{j \neq i} \left({\hat{α}}_{i , j}+{\hat{β}}_{i , j}\right)\right) = {\sum }_{i = 1}^{t + 1} \left({x}_{i}^{′}{k}_{i}\right) \\ + {\sum }_{i = 1}^{t + 1} \left({\sum }_{j \neq i} \left({\hat{α}}_{i , j}+{\hat{β}}_{i , j}\right)\right) \\ = {\sum }_{i = 1}^{t + 1} \left({x}_{i}^{′}{k}_{i}\right) + {\sum }_{i = 1}^{t + 1} \left({\sum }_{j \neq i} \left({x}_{i}^{′}⋅{k}_{j}-{\hat{β}}_{i , j}+{\hat{β}}_{i , j}\right)\right) \\ = {\sum }_{i = 1}^{t + 1} \left({x}_{i}^{′}{k}_{i}\right) + {\sum }_{i = 1}^{t + 1} \left({\sum }_{j \neq i} \left({x}_{i}⋅{k}_{j}\right)\right) \\ = \left({k}_{1}+{k}_{2}+⋯+{k}_{t + 1}\right) ⋅ \left({x}_{1}^{′}+{x}_{2}^{′}+⋯+{x}_{t + 1}^{′}\right)\end{matrix}$

In step S423, after generating s, any one of the t+1 service providers sends a transaction Tx10 calling the contract to the blockchain system to upload r and s in the signature.

In step S425, in the blockchain system, the signature is verified by using the signature public key corresponding to Account1, and step S427 is performed to push the signature to the administrator device if the verification succeeds.

Because s *= k* · *m* + *k · x ·* r here is essentially the same as Equation (a) in the above-mentioned ECDSA signature algorithm, a total public key X can be used for verification clearly.

It should be noted that a case in which the quantity is exactly t+1 is mainly used for description in the above-mentioned example. Actually, there can be more than t+1 service providers. When there are more than t+1 service providers, for example, there are t+2 service providers, a sum of private key shards of the t+2 service providers is still equal to *k · H*(*m*) *+ k · x · r* because ${x}_{1}^{′} + {x}_{2}^{′} + ⋯ + {x}_{t + 1}^{′} + {x}_{t + 2}^{′}$ still equal to x.

When the preprocessing phase includes multiple preprocessing processes, a quantity of groups of preprocessing data is maintained in the row of Account1 in Table1 in the contract state, and each group of preprocessing data corresponds to one preprocessing process, that is, a quantity of groups of preprocessing data is increased by 1 after each preprocessing process is completed. After the signing phase is performed by using one group of preprocessing data shown in FIG. 4, step S403 further includes: subtracting the quantity of groups of preprocessing data by 1, and determining whether the quantity of groups of preprocessing data is less than the above-mentioned parameter min. The blockchain system sends a preprocessing event to the n off-chain service providers if yes, causing the process shown in FIG. 3 to be repeated until the quantity of groups of preprocessing data reaches the parameter max.

It can be understood that steps S403 to S421 in FIG. 4 (i.e., the steps included in dashed line boxes in FIG. 4) show an example of a process in which the at least t+1 service providers exchange information based on the blockchain system to generate the signature of the target message. Implementations of this specification are not limited to generating the signature through the interaction process shown in steps S403 to S421 in FIG. 4. For example, the blockchain system can interact with the at least t+1 service providers in different methods based on different distributed signature protocols.

When obtaining a signature of the root CA of the CA contract, the administrator device can assemble the root CA based on the signature and the certificate content of the root CA. When obtaining a signature of the CSR of the CA contract, the administrator device can assemble the complete CSR based on the signature and the CSR content, submit the complete CSR to an upper-level CA to issue an intermediate CA, where the intermediate CA can include description information of the CA contract, public key information, signatures of the CA contract on the description information and the public key information, validity period information, a serial number, and a signature of the upper-level CA on all the above-mentioned information.

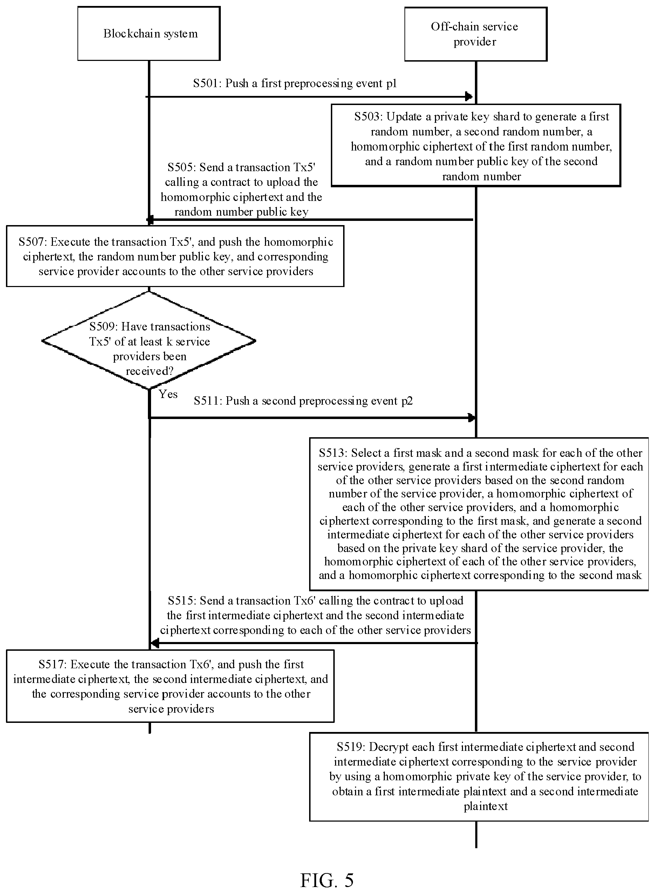

FIG. 5 is a flowchart illustrating a preprocessing phase, according to another implementation of this specification.

As shown in FIG. 5, in step S501, the blockchain system pushes a first preprocessing event p1 to each of the n off-chain service providers.

For this step, references can be made to the above-mentioned descriptions of step S301. Details are omitted here for simplicity.

In step S503, each service provider Pᵢ updates a private key shard to generate a first random number kᵢ, a second random number γᵢ, a homomorphic ciphertext of the first random number kᵢ, and a random number public key of the second random number γᵢ.

Each service provider Pᵢ can update the private key shard ${x}_{i}^{′} ← {l}_{i} \left(0\right) ⋅ {ω}_{i}$ of the service provider by using the above-mentioned Lagrange coefficient.

For example, for the service provider ${P}_{1} , {l}_{1} \left(0\right) = {\prod }_{1 \leq m \leq t + 1 , m \neq 1} \frac{{P}_{m}}{{P}_{m} - {P}_{i}} = {\prod }_{1 \leq m \leq 3 , m \neq 1} \frac{m}{m - 1} = \frac{2}{2 - 1} ⋅ \frac{3}{3 - 1} = 3$ , and a private key shard of the service provider P₁ is updated to ${x}_{1}^{′} ← 1 ⋅ {ω}_{1}$.

For the service provider ${P}_{2} , {l}_{2} \left(0\right) = {\prod }_{1 \leq m \leq t + 1 , m \neq 2} \frac{{P}_{m}}{{P}_{m} - {P}_{i}} = {\prod }_{1 \leq m \leq 3 , m \neq 2} \frac{m}{m - 2} = \frac{1}{1 - 2} ⋅ \frac{3}{3 - 2} = - 3$ , and a private key shard of the service provider P₂ is updated to ${x}_{2}^{′} ← - 3 ⋅ {ω}_{2}$.

For the service provider ${P}_{3} , {l}_{3} \left(0\right) = {\prod }_{1 \leq m \leq t + 1 , m \neq 3} \frac{{P}_{m}}{{P}_{m} - {P}_{i}} = {\prod }_{1 \leq m \leq 3 , m \neq 2} \frac{m}{m - 3} = \frac{1}{1 - 3} ⋅ \frac{2}{2 - 3} = 1$ , and a private key shard of the service provider P₃ is updated to ${x}_{3}^{′} ← 1 ⋅ {ω}_{3}$.

For the service provider ${P}_{4} , {l}_{4} \left(0\right) = {\prod }_{1 \leq m \leq t + 1} \frac{{P}_{m}}{{P}_{m} - {P}_{i}} = {\prod }_{1 \leq m \leq 3 , m \neq 2} \frac{m}{m - 4} = \frac{1}{1 - 4} ⋅ \frac{2}{2 - 4} ⋅ \frac{3}{3 - 4} = - 1$ , and a private key shard of the service provider P₄ is updated to ${x}_{4}^{′} ← - 1 ⋅ {ω}_{4}$.

Another service provider Pᵢ can similarly update a private key shard of the service provider. Details are omitted here for simplicity.

For a process in which each service provider generates the random number kᵢ, the random number γᵢ, the homomorphic ciphertext of the random number kᵢ, and the random number public key of the random number γᵢ, references can be made to the above-mentioned descriptions of step S303. Details are omitted here for simplicity.

In step S505, each service provider sends a transaction Tx5' calling the contract C1 to the blockchain system to upload the homomorphic ciphertext of the random number kᵢ and the random number public key of the random number γᵢ.

In step S507, the blockchain system executes the transaction Tx5' to generate an event including the homomorphic ciphertext of the random number kᵢ and the random number public key of the random number γᵢ of the service provider, and pushes the event to each of the other service providers in response to subscription of each of the other service providers to the event.

The blockchain system also maintains a quantity of received transactions Tx5' in the contract state of the contract C1 when executing the transaction Tx5'. That is, each time one transaction Tx5' is executed, the quantity is increased by 1.

In step S509, the blockchain system further determines, based on a pre-stored parameter k corresponding to Account1, whether homomorphic ciphertexts and random number public keys of at least k service providers have been received.

In an implementation, after executing one transaction Tx5' each time, the blockchain system determines, based on the pre-stored parameter k corresponding to Account1, whether the transactions Tx5' of the k service providers have been received.

In another implementation, a timeout length corresponding to a preprocessing process can be set in the contract C1. After executing one transaction Tx5' each time, the blockchain system determines, based on a timestamp recorded in the blockchain system, whether the preprocessing process exceeds the timeout length; determines whether the transactions Tx5' of the at least k service providers have been received if yes; and enters the next round of interaction of the preprocessing process if yes; otherwise, determines that the preprocessing process fails.

Step S511 is performed to push a second preprocessing event p2 to each of the at least k service providers when the blockchain system determines that the transactions Tx5' of the at least k service providers have been received.

The second preprocessing event p2 can include Account1 and a field indicating the second round of the preprocessing phase, to instruct the at least k service providers to continue the second round of interaction in the preprocessing process corresponding to Account1.

In the blockchain system, the contract C1 controls progress of the preprocessing process based on a threshold k in the preprocessing process, so that there is no need to collect data of all of the n service providers, some of the n service providers are allowed to be offline in the preprocessing phase, and some of the at least k service providers are allowed to be offline after the signing phase is entered, thereby ensuring overall service availability.

In step S513, each service provider Pᵢ in the at least k service providers selects a first mask ${β}_{i , j} ∈ {ℤ}_{p}$ and a second mask ${\hat{β}}_{i , j} ∈ {ℤ}_{p}$ for the other service providers, generates a first intermediate ciphertext *D_{i,j}* = *γᵢ* ⊙ *Kⱼ* ⊕ *encⱼ*(*-β_{i,j}*) = *encⱼ*(*γᵢ* · *kⱼ - β_{i,j}*) for the other service providers based on the second random number *γᵢ* of the service provider, a homomorphic ciphertext *Kⱼ* of the other service providers, and a homomorphic ciphertext *encⱼ*(-*β_{i,j})* corresponding to the first mask, and generates a second intermediate ciphertext ${\hat{D}}_{i , j} = {x}_{i} ⊙ {K}_{j} ⊕ {enc}_{j} \left(-{\hat{β}}_{i , j}\right) = {enc}_{j} \left({x}_{i}^{′}⋅{k}_{j}-{\hat{β}}_{i , j}\right)$ for the other service providers based on the private key shard ${x}_{i}^{′}$ of the service provider, the homomorphic ciphertext *Kⱼ* of the other service providers, and a homomorphic ciphertext *encⱼ*(-*β̂_{i,j}*) corresponding to the second mask.

In step S515, each service provider *Pᵢ* in the at least k service providers sends a transaction Tx6' calling the contract to the blockchain system to upload the first intermediate ciphertext and the second intermediate ciphertext that are generated by the service provider and that correspond to each of the other service providers. The transaction Tx6' can include Account1, a service provider account sending the transaction Tx6, and the first intermediate ciphertext and the second intermediate ciphertext corresponding to each of the other service providers.

In step S517, the blockchain system executes the transaction Tx6' to generate an event corresponding to the transaction, stores, in the event, each first intermediate ciphertext and second intermediate ciphertext that are calculated by the service provider for the other service providers, and pushes the event to each service provider in response to subscription of each service provider.

In step S519, each service provider *Pᵢ* in the at least k service providers decrypts each first intermediate ciphertext *D_{j,i} = encᵢ*(*γⱼ · kᵢ - β_{j,i}*) and second intermediate ciphertext ${\hat{D}}_{j , i} = {enc}_{i} \left({x}_{j}^{′}⋅{k}_{i}-{\hat{β}}_{j , i}\right)$ corresponding to the service provider by using a homomorphic private key of the service provider, to obtain a first intermediate plaintext *α_{i,j} = γⱼ · kᵢ - β_{j,i}* and a second intermediate plaintext ${\hat{α}}_{i , j} = {x}_{j}^{′} ⋅ {k}_{i} - {\hat{β}}_{j , i}$*.*

After the blockchain system completes step S517, similar to the process shown in FIG. 3, the blockchain system can determine, based on the parameter max, whether to repeat the preprocessing process shown in FIG. 5, so that multiple groups of preprocessing data can be prepared in advance at each service provider by repeating the process shown in FIG. 5 max times, thereby ensuring high availability of a signature function.

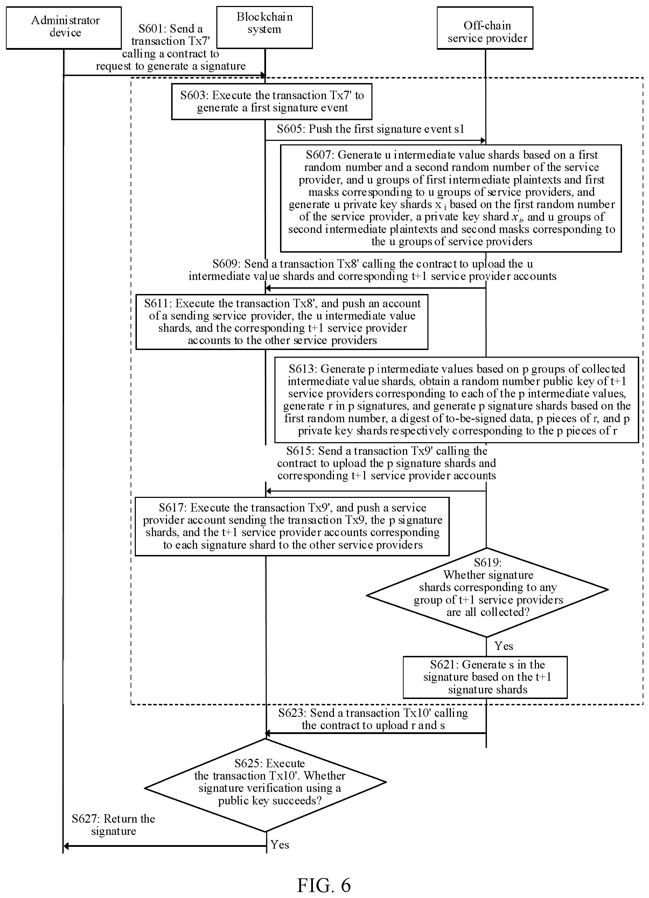

FIG. 6 is a flowchart illustrating a signing phase in distributed threshold signing, according to another implementation of this specification.

As shown in FIG. 6, in step S601, the administrator device sends a transaction Tx7' calling the signature contract to the blockchain system to request to generate a signature on a target message (e.g., CA contract certificate content).

For this step, references can be made to the above-mentioned descriptions of step S401. Details are omitted here for simplicity.

In step S603, the blockchain system executes the transaction Tx7' to generate a first signature event, where the first signature event includes Account1 with a signature permission.

In step S605, the blockchain system pushes the first signature event to each service provider based on subscription of each service provider.

In step S607, each service provider receiving the first signature event s1 generates u intermediate value shards based on a first random number and a second random number of the service provider, and u groups of first intermediate plaintexts and first masks corresponding to u groups of service providers, and generates u private key shards ${x}_{i}^{"}$ based on the first random number and a private key shard ${x}_{i}^{′}$ of the service provider, and u groups of second intermediate plaintexts and second masks corresponding to the u groups of service providers.

Assume that the n service providers can form a maximum of q groups of service providers, and each group of service providers includes at least t+1 service providers. The following uses one group of service providers including t+1 service providers as an example for description. For a service provider Pᵢ, there are d groups of service providers including the service provider Pᵢ in the q groups of service providers.

For example, n=7, t=2, and 7 service providers can form a maximum of $q = {C}_{7}^{3} = 35$ groups of service providers, including, for example, the following 10 groups of service providers:
(1) P₁, P₂, and P₃;
(2) P₁, P₂, and P₄;
(3) P₁, P₂, and P₅;
(4) P₁, P₃, and P₄;
(5) P₁, P₃, and P₅;
(6) P₁, P₄, and P₅;
(7) P₂, P₃, and P₄;
(8) P₂, P₃, and P₅;
(9) P₂, P₄, and P₅;
(10) P₃, P₄, and P₅;
...

There are $d = {C}_{6}^{2} = 15$ groups of service providers including the service provider Pᵢ in the above-mentioned 35 groups of service providers.

Each service provider receiving the first signature event s1 can randomly select u groups from service provider groups including the service provider (each service provider group includes t+1 service providers) in the above-mentioned d groups, and generate an intermediate value shard and a private key shard for each of the u groups.

Specifically, for one group of the u groups of service providers, each service provider generates an intermediate value shard ${δ}_{i} = {γ}_{i} ⋅ {k}_{i} + {\sum }_{j = 1 , j \neq i}^{t + 1} \left({α}_{i , j}+{β}_{i , j}\right)$ based on a first random number *kᵢ* and a second random number *γᵢ* of the service provider, first intermediate plaintexts *α_{i,j}* and first masks *β_{i,j}* corresponding to the other t service providers, and generates an updated private key shard ${x}_{i}^{"} = {x}_{i}^{′} ⋅ {k}_{i} + {\sum }_{j = 1 , j \neq i}^{t + 1} \left({\hat{α}}_{i , j}+{\hat{β}}_{i , j}\right)$ based on the first random number *kᵢ* and a private key shard ${x}_{i}^{′}$ of the service provider, second intermediate plaintexts *α_{i,j}* and second masks *β̂_{i,j}* corresponding to the other t service providers.

In step S609, each service provider *Pᵢ* sends a transaction Tx8' calling the contract C1 to the blockchain system to upload the u intermediate value shards calculated by the service provider and corresponding t+1 service provider accounts.

In step S611, the blockchain system executes the transaction Tx8' to generate an event corresponding to the transaction Tx8', where the event includes the account of the service provider *Pᵢ*, the u intermediate value shards, and the corresponding t+1 service provider accounts; and pushes the event to each service provider based on subscription of each service provider to the event.

Multiple service providers receiving the first signature event s1 can perform steps S607 to S611 multiple times. When performing step S607 for the second time, each service provider can determine, based on a service provider group corresponding to an intermediate value shard generated by another service provider performing receiving, several service provider groups selected for current processing, so that each service provider does not need to exhaustively perform calculation for the d groups in which each service provider is located, but data of one service provider group needs to be collected at a larger probability when an intermediate value or a signature component s is subsequently generated.

In step S613, each service provider generates p intermediate values $δ = {\sum }_{i = 1}^{t + 1} {δ}_{i}$ based on p groups of collected intermediate value shards, obtains a random number public key of t+1 service providers corresponding to each of the p intermediate values, generates r in p signatures, and generates p signature shards based on the first random number, a digest of to-be-signed data, p pieces of r, and p private key shards respectively corresponding to the p pieces of r.

Specifically, assume that the service provider *P*₁ collects three intermediate value shards corresponding to the above-mentioned service provider group (1): *δ*₁ that is calculated by the service provider P₁ and that corresponds to the group (1), *δ*₂ that is calculated by the service provider P₂ and that corresponds to the group (1), and *δ*₃ that is calculated by the service provider P₃ and that corresponds to the group (1), and the service provider *P*₁ can generate an intermediate value $δ = {\sum }_{i = 1}^{3} {δ}_{i}$ corresponding to the group (1). For the above-mentioned service provider group (2), the service provider *P*₁ collects *δ*₁ that is calculated by the service provider P₁ and that corresponds to the group (2), *δ*₂ that is calculated by the service provider P₂ and that corresponds to the group (2), and *δ*₃ that is calculated by the service provider P₃ and that corresponds to the group (2), and generates an intermediate value *δ* corresponding to the group (2). The rest can be deduced by analogy.

The service provider *Pᵢ* obtains the random number public key *Γᵢ* of the t+1 service providers corresponding to each of the p intermediate values *δ* to generate r in the p signatures after generating the p intermediate values.

References can be made to the above-mentioned descriptions of step S413. For each intermediate value *δ*, the blockchain system can obtain the random number public key *Γᵢ* of the t+1 service providers corresponding to the intermediate value, and calculate r corresponding to the intermediate value based on the formula $R = {\left({\prod }_{j = 1}^{t + 1} {Γ}_{j}\right)}^{{δ}^{- 1}}$.

For example, as described above, after generating the intermediate value corresponding to the group (1), the service provider P₁ can obtain random number public keys *Γ*₁, *Γ*₂*,* and *Γ*₃ respectively corresponding to the service providers P₁, P₂, and P₃, and calculate R based on the above-mentioned formula to obtain r corresponding to the service provider group (1).

Then, the service provider *Pᵢ* can generate the p signature shards based on the first random number *kᵢ*, the digest m of the target message, the p pieces of r, and the p private key shards ${x}_{i}^{"}$ respectively corresponding to the p pieces of r.

Specifically, the service provider Pᵢ can obtain, for example, ${x}_{i}^{"}$ generated for the service provider group (1), and then calculate the signature shard *σᵢ* corresponding to the service provider group (1) based on the formula ${σ}_{i} = {k}_{i} H \left(m\right) + {x}_{i}^{"} r$*.*

In step 615, each service provider sends a transaction Tx9' calling the contract C1 to the blockchain system to upload the p signature shards and the t+1 service provider accounts corresponding to each signature shard. The transaction Tx9' includes Account1.

The service provider P₁ is used as an example. The service provider P₁ sends the transaction Tx9' to the blockchain system to upload several signature shards respectively corresponding to several groups of service providers and each service provider account in a group of service providers corresponding to each signature shard.

In step S617, the blockchain system executes the transaction Tx9' to generate an event corresponding to the transaction Tx9', where the event includes a service provider account for sending the transaction Tx9', the p signature shards, and the t+1 service provider accounts corresponding to each signature shard; and pushes the event to each service provider that subscribes to the event in response to subscription of each service provider to the event.

In step S619, each service provider determines whether signature shards corresponding to any group of t+1 service providers are all collected.

Each service provider can determine, after a predetermined time period elapses after any signature shard is generated, whether signature shards of any group of service providers are all collected, or can determine, at an interval of predetermined duration after any signature shard is generated, whether signature shards of any group of service providers are all collected. For example, assume that the service providers P₁, P₂, and P₃ all have sent the transaction Tx9' to the blockchain system. After generating the signature shard *σ*₁ corresponding to the group (1), the service provider P₁ has received the respective signature shards *σ*₂ and *σ*₃ of the service providers P₂ and P₃ corresponding to the group (1) from the blockchain system, and therefore can determine that the signature shards corresponding to the service provider group (1) all have been collected.

In step S621, after determining that signature shards of any group of t+1 service providers all have been collected, any service provider generates s in the signature based on the t+1 signature shards corresponding to the group of service providers.

In step S623, the any service provider sends a transaction Tx10' calling the contract C1 to the blockchain system to upload r and s in the signature, where the transaction 10' can include Account1.

In step S625, the blockchain system verifies the signature by using the signature public key corresponding to Account1, and determines whether the verification succeeds.

In step S627, the blockchain system returns the signature to the administrator device if the signature verification succeeds.

For steps S621 to S627, references can be made to the above-mentioned descriptions of steps S421 to S427. Details are omitted here for simplicity.

Similar to the process shown in FIG. 4, after Account1 is signed in the blockchain system each time, a group of preprocessing data corresponding to Account1 can be deleted from the contract state, and it is determined, based on a quantity of groups of remaining preprocessing data, whether to repeat the preprocessing process.

It can be understood that steps S603 to S621 in FIG. 6 (i.e., the steps included in dashed line boxes in FIG. 6) show an example of a process in which the blockchain system generates a signature on a target message through interaction with multiple service providers. Implementations of this specification are not limited to generating the signature through the interaction process shown in steps S603 to S621 in FIG. 6. For example, the blockchain system can interact with the multiple service providers in different methods based on different distributed signature protocols.

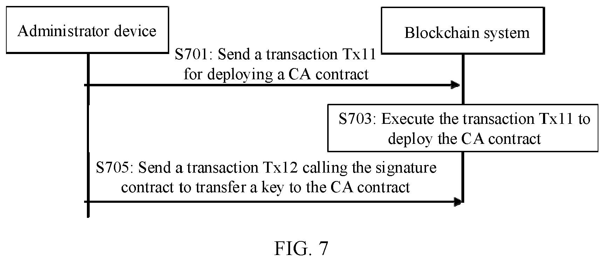

FIG. 7 is a flowchart illustrating a method for deploying a CA contract, according to an implementation of this specification.

As shown in FIG. 7, in step S701, an administrator device sends a transaction Tx11 for deploying a CA contract to a blockchain system.

In addition to contract code of the CA contract, the transaction Tx11 can further include the following content: a root CA or an intermediate CA of the CA contract for demonstrating validity of the CA contract; an account list of several CA administrators; and a contract address of a signature contract for submitting a signature request to the signature contract.

In step S703, the blockchain system executes the transaction Tx11 to deploy the CA contract.

Specifically, each node in the blockchain system generates a contract address of the CA contract based on the transaction Tx11, and stores the contract code of the CA contract, the root CA or the intermediate CA of the CA contract, the account list of several CA administrators, and the contract address of the signature contract in association with the contract address of the CA contract in a state database.

In step S705, the administrator device sends a transaction Tx12 calling the signature contract to the blockchain system, and transfers a distributed key corresponding to Account1 to the CA contract.

The transaction Tx12 is sent by the administrator account Account1 and calls, for example, a Transfer function of the signature contract, and an incoming parameter of the Transfer function includes Account1 and the contract address of the CA contract for transferring the distributed key corresponding to Account1 to the CA contract. Specifically, the blockchain node first determines whether Table1 in a contract state of the signature contract includes a row corresponding to a sender of the transaction Tx12 when executing the transaction Tx12, and it indicates that the sender has no key transfer permission if not, or Account1 in the row corresponding to the sender (i.e., Account1) in Table1 in the contract state of the signature contract is updated to the contract address of the CA contract (e.g., Account3) if yes. An initialization node in this implementation of this specification is completed and the CA contract can start to provide a certificate service after the transfer.

In another implementation, the administrator device can call the signature contract in the transaction for deploying the CA contract and include a to-be-signed CSR to directly apply to the signature contract for the distributed key corresponding to the CA contract, and instruct the signature contract to sign the CSR based on the distributed key and return the signature to the CA contract. After the CA contract receives the signature, in a self-signed root CA mode, the CA contract assembles a root certificate of the CA contract based on the signature, and stores the certificate in the contract state of the CA contract. In an intermediate certificate mode, the CA contract assembles a complete CSR based on the signature, and the CA administrator submits the complete CSR to an upper-level CA for signing to obtain an intermediate CA, and stores the intermediate CA in the contract state of the CA contract.

Specifically, the administrator device can send a transaction Tx11' for deploying the CA contract to the blockchain system, where the transaction Tx11' includes CA contract certificate content of the CA contract, a call to the signature contract, and information about parameters n and t, and the transaction Tx11' can further include accounts of several CA administrators; and verify whether a sender of the transaction Tx11' is an administrator account, provide a digest of the CA contract certificate content, the information about the parameters n and t, and a contract account of the CA contract for the signature contract if the verification succeeds, associatively store the CA contract account, the digest of the CA contract certificate content, and the information about the parameters n and t in the contract state of the signature contract, and instruct n service providers to enter a key generation phase.

Each of devices of the n service providers generates a first private key shard and a signature public key of the device based on a distributed key generation protocol, and sends a transaction Tx12' calling the signature contract to the blockchain system.

The blockchain system stores the signature public key in association with the CA contract account in the contract state of the signature contract based on the transaction Tx12', and instructs at least t+1 service providers in the n service providers to sign the CA contract certificate content.

The devices of the at least t+1 service providers performs distributed threshold signing, so that the device of any one of the at least t+1 service providers generates a signature on the CA contract certificate content, and returns the signature to the blockchain system by sending a transaction Tx13' calling the signature contract to the blockchain system, where the signature is generated based on the digest of the CA contract certificate content and the private key shard of each of the at least t+1 service providers, and the transaction Tx13' includes the contract account of the CA contract.

The blockchain system returns the signature to the CA contract based on the contract account of the CA contract in the transaction Tx13', and stores a certificate of the CA contract in the contract state of the CA contract, where the certificate of the CA contract includes the CA contract certificate content and the signature.

After the above-mentioned initialization phase is completed, the CA contract can provide a certificate service, such as issuing a CA certificate or revoking a CA certificate.

FIG. 8 is a flowchart illustrating a certificate issuance method, according to an implementation of this specification.

As shown in FIG. 8, first, in step S801, user equipment sends a transaction Tx13 calling a CA contract to a blockchain system to send a certificate issuance request.

The user can first generate a public-private key pair of the user, and generate a CSR based on a public key of the user, where the CSR includes certificate content needed by the user and the public key of the user. For example, the certificate content can include user identity information, user equipment information, and a certificate expiration time. The CA contract is called in the transaction Tx13 and the above-mentioned generated CSR is transferred to the CA contract to request to issue a user certificate.

In step S803, the blockchain system executes the transaction Tx13 to store the certificate issuance request.

The blockchain system can deposit the CSR in the contract state of the CA contract based on the transaction Tx13.

Specifically, the CSR can be deposited in a to-be-approved queue in the contract state of the CA contract.

In step S805, the blockchain system sends a to-be-approved CSR to several CA administrator devices for approval.

The blockchain system can send the to-be-approved CSR in the to-be-approved queue to each CA administrator device based on several CA administrator account lists stored in the CA contract. In one implementation, each CA administrator device can send a transaction calling the CA contract to the blockchain system to request to read the to-be-approved CSR in the to-be-approved queue. The blockchain system can read the to-be-approved queue in the contract state of the CA contract and return the to-be-approved CSR in the queue to the CA administrator device based on the transaction if it is determined that a sender of the transaction is a CA administrator account.

In step S807, the CA administrator device obtains an approval result for the CSR.

Each CA administrator can review the CSR received by the CA administrator device, and enter an approval result to the CA administrator device.

In step S809, each CA administrator device sends a transaction Tx14 calling the CA contract to the blockchain system to upload the above-mentioned approval result for the CSR.

Multiple CA administrator devices respectively send multiple transactions Tx14 to the blockchain system. It can be understood here that the multiple transactions Tx14 include a transaction sent by each CA administrator device at this phase. A sender of each transaction Tx14 is a CA administrator account, and each transaction Tx14 includes an approval result of each CA administrator for the CSR.

In step S811, the blockchain system executes each transaction Tx14, determines, based on a predetermined rule and the approval result in each transaction Tx14, whether the CSR is approved, and generates an unsigned certificate and provides a digest of the unsigned certificate for the signature contract to generate a signature event if yes.

The predetermined rule is, for example, each blockchain node in the blockchain system considers that the CSR is approved when the CSR is approved by all CA administrators.

In an approval case, each blockchain node obtains a serial number of a current certificate based on a serial number field in the contract state of the CA contract, and increases the serial number field in the contract state by 1 after obtaining the serial number of the current certificate, thereby ensuring uniqueness of a serial number of each certificate.

Then, each blockchain node can generate an unsigned certificate corresponding to the CSR, where the unsigned certificate includes, for example, content in the CSR (e.g., user information, user equipment information, and a user public key), a certificate effective time, and a certificate serial number. The certificate effective time is a time corresponding to a current block (e.g., a timestamp of the current block). The unsigned certificate can further include a certificate expiration time when the CSR further includes the certificate expiration time.

It can be understood that steps S805 to S809 in FIG. 8 are not necessary steps. For example, the user equipment can first send the certificate issuance request to the CA administrator device, and the CA administrator device sends the transaction calling the CA contract to the blockchain system to upload the certificate issuance request to the CA contract after the CA administrator device approves the certificate issuance request. In this case, in step S811, the unsigned certificate can be directly generated based on the transaction sent by the CA administrator. In another implementation, approval logic different from that in steps S805 to S809 can be set in the contract code of the CA contract. For example, after the to-be-approved certificate issuance request is pushed to the CA administrator device, when it is determined that the user satisfies a predetermined condition, the certificate is first issued to the user without waiting for the CA administrator device to return an approval result to issue the certificate.

Then, each blockchain node can calculate the digest of the unsigned certificate (e.g., a hash value), and provide the digest of the unsigned certificate for the signature contract based on the call to the signature contract in the CA contract to request to generate a signature on the unsigned certificate. Each blockchain node can execute the signature contract. Based on execution of the signature contract, it is first determined whether the CA contract has a permission to request a signature, that is, the blockchain node determines, in Table1 in the contract state of the signature contract, whether there is a row corresponding to the contract account of the CA contract, and determines that the CA contract has a permission if yes. Then, the blockchain node can generate a signature event, where the signature event includes, for example, the digest of the unsigned certificate and the contract account of the CA contract, to indicate that the signature request is made by the CA contract.

In step S813, the blockchain system pushes the generated signature event to each service provider that subscribes to the event in response to subscription of multiple service providers in the n off-chain service providers to the signature event.

In step S815, at least t+1 service providers in the n service providers enter a signing phase in response to the signature event to generate a signature on the unsigned certificate.

The at least t+1 service providers can interact through the process shown in FIG. 4 or FIG. 6 to generate the signature (r, s) on the unsigned certificate. Details are omitted here for simplicity.

In step S817, any one of the at least t+1 service providers sends a transaction Tx15 calling the signature contract to the blockchain system to upload the certificate signature after generating the signature, where the transaction Tx15 includes the contract account of the CA contract.

In step S819, the blockchain system executes the transaction Tx15, and returns the certificate signature to the CA contract after the certificate signature verification succeeds.

When executing the transaction Tx15, each blockchain node obtains a signature public key corresponding to the CA contract from the contract state of the signature contract, verifies the certificate signature by using the signature public key, and returns the certificate signature to the CA contract by calling the CA contract if the verification succeeds.

In step S821, the blockchain system issues a certificate based on the certificate signature.

Specifically, each blockchain node can execute the CA contract based on the call of the signature contract to the CA contract, assemble the certificate signature and the unsigned certificate into the certificate, and store the certificate in the contract state of the CA contract. An owner or a verifier of the certificate can obtain the certificate from the blockchain system.

In an implementation, a revocation list is further stored in the contract state of the CA contract, and the revocation list includes a serial number of a revoked certificate.

After the several CA administrators determine to revoke, for example, a certificate CA1, each CA administrator can send a transaction Tx16 calling the CA contract to the blockchain system to request to revoke the certificate CA1, where the transaction includes a serial number of the certificate CA1. After executing each transaction Tx16, the blockchain system stores a revocation request of each CA administrator in the contract state, and determines, based on a predetermined rule, whether to revoke the certificate CA1. For example, after each of the several CA administrators sends the revocation request for the certificate CA1 to the blockchain system, the blockchain system determines to revoke the certificate CA1, and places the serial number of the certificate CA1 in the revocation list, to indicate that the certificate CA1 has been revoked.

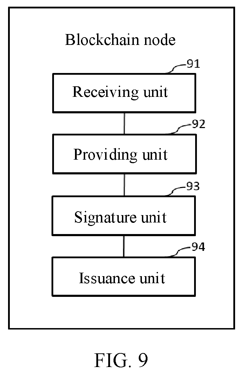

FIG. 9 is a diagram illustrating an architecture of a node in a blockchain system, according to an implementation of this specification. A CA contract and a signature contract are deployed in the blockchain system, the CA contract includes a call to the signature contract, a signature public key and information about parameters n and t are stored in association with an account of the CA contract in a contract state of the signature contract, and the signature public key is generated by n service providers by using a distributed key protocol; and the node includes: a receiving unit 91, configured to receive a first transaction calling the CA contract, where the first transaction includes a user certificate issuance request; a providing unit 92, configured to provide a digest of user certificate content corresponding to the user certificate issuance request for the signature contract; a signature unit 93, configured to instruct, based on the signature contract, at least t+1 service providers in the n service providers to generate a first signature on the user certificate content based on a private key shard corresponding to the signature public key, where the receiving unit 91 is further configured to receive a second transaction calling the signature contract from any one of the at least t+1 service providers, where the second transaction includes a contract account of the CA contract and the first signature; and an issuance unit 94, configured to return the first signature to the CA contract based on the second transaction, and issue a user certificate based on the first signature by executing the CA contract.

An implementation of this specification further provides a computer-readable storage medium, on which a computer program is stored. When the computer program is executed in a computer, the computer performs the method shown in any one of FIG. 2 to FIG. 8.

An implementation of this specification further provides a computing device, including a memory and a processor. The memory stores executable code, and when executing the executable code, the processor implements the method shown in any one of FIG. 2 to FIG. 8.

In the 1990s, whether a technical improvement is a hardware improvement (e.g., an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers obtain the corresponding hardware circuit structure by programming the improved method process into the hardware circuit. Therefore, a method procedure can be improved by using a hardware entity module. For example, a programmable logic device (PLD) (e.g., a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be in a form of a microprocessor or a processor, a computer-readable medium that stores computer-readable program code (such as software or firmware) that can be executed by the microprocessor or the processor, a logic gate, a switch, an application-specific integrated circuit (ASIC), a programmable logic controller, or an embedded microcontroller. Examples of the controller include but are not limited to the following microcontrollers: ARC 625D, Atmel AT91SAM, Microchip PIC18F26K20, and Silicone Labs C8051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware component, and an apparatus that is configured to implement various functions and that is included in the controller can also be considered as a structure in the hardware component. Alternatively, the apparatus configured to implement various functions can even be considered as both a software module implementing a method and a structure in the hardware component.

The system, apparatus, module, or unit described in the above-mentioned implementations can be specifically implemented by a computer chip or an entity, or can be implemented by a product having a certain function. A typical implementation device is a server system. Certainly, this application does not exclude that with development of future computer technologies, a computer that implements a function of the above-mentioned implementation can be, for example, a personal computer, a laptop computer, a vehicle-mounted man-machine interaction device, a cellular phone, a camera phone, a smartphone, a personal digital assistant, a media player, a navigation device, an e-mail device, a game console, a tablet computer, a wearable device, or a combination of any of these devices.

Although one or more implementations of this specification provide method operating steps as described in the implementations or a flowchart, more or fewer operating steps can be included on the basis of conventional or noncreative means. A sequence of steps listed in the implementations is merely one of various step execution sequences and does not indicate a sole execution sequence. In practice, when being executed by an apparatus or an end-user device product, the steps can be performed sequentially or in parallel (e.g., by parallel processors or in a multi-thread processing environment, or even in a distributed data processing environment) based on the method shown in the implementations or the accompanying drawings. The terms "include", "comprise", or any other variants thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, the existence of additional identical or equivalent elements in the process, method, product, or device that includes the elements is not excluded. For example, if the words first, second, etc. are used for indicating names, they do not indicate any particular order.

For ease of description, the above-mentioned apparatus is described by dividing functions into various modules. Certainly, during implementation of one or more implementations of this specification, the functions of the modules can be implemented in same one or more pieces of software and/or hardware, or modules implementing the same function can be implemented by using a combination of multiple sub-modules or sub-units, etc. The described apparatus implementations are merely examples. For example, division into the units is merely logical function division and there can be other division methods in actual implementation. For example, multiple units or components can be combined or integrated into another system, or some features can be ignored or not performed. In addition, the displayed or discussed mutual couplings or direct couplings or communication connections can be implemented by using some interfaces. The indirect couplings or communication connections between the apparatuses or units can be implemented in electronic, mechanical, or other forms.

This application is described with reference to a flowchart and/or a block diagram of a method, an apparatus (system), and a computer program product according to some implementations of this application. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can be stored in a computer-readable storage that can instruct the computer or any other programmable data processing device to work in a specific method, so that the instructions stored in the computer-readable storage generate an artifact that includes an instruction apparatus. The instruction apparatus implements a specific function in one or more processes in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPU), input/output interfaces, network interfaces, and memories.

The memory can include a non-persistent memory, a random access memory (RAM), a non-volatile memory, and/or another form in a computer-readable medium, for example, a read-only memory (ROM) or a flash random access memory (flash RAM). The memory is an example of the computer-readable medium.

The computer-readable medium includes persistent, non-persistent, removable, and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. As described in this specification, the computer-readable medium does not include computer-readable transitory media such as a modulated data signal and a carrier.

A person skilled in the art should understand that one or more implementations of this specification can be provided as methods, systems, or computer program products. Therefore, the one or more implementations of this specification can use a form of hardware only implementations, software only implementations, or implementations with a combination of software and hardware. Moreover, the one or more implementations of this specification can use the form of a computer program product implemented on one or more computer available storage media (including, but not limited to, disk storage, CD-ROM, optical memory, etc.), where the computer available program code is included.

The one or more implementations of this specification can be described in common contexts of computer-executable instructions executed by a computer, such as a program module. Generally, the program module includes a routine, a program, an object, a component, a data structure, etc. executing a specific task or implementing a specific abstract data type. The one or more implementations of this specification can also be practiced in a distributed computing environment where tasks are performed by remote processing devices that are connected through a communication network. In the distributed computing environment, the program module can be located in both local and remote computer storage media including storage devices.

The implementations in this specification are described in a progressive method. For same or similar parts in the implementations, references can be made to each other. Each implementation focuses on a difference from other implementations. In particular, the system implementations are basically similar to the method implementations, and are described simply. For related parts, references can be made to the descriptions in the method implementations. In the description of this specification, references to term "an implementation", "some implementations", "examples", "specific examples", or "some examples" mean that specific features, structures, materials, or characteristics described in conjunction with this implementation or example are included in at least one implementation or example of this specification. In this specification, it is unnecessary for the exemplary representation of the above-mentioned terms to refer to the same implementation or example. Moreover, the specific features, structures, materials, or characteristics described can be combined in any one or more implementations or examples in a suitable method. In addition, without contradicting each other, a person skilled in the art can combine and integrate different implementations or examples described in this specification and features of the different implementations or examples.

The above-mentioned descriptions are merely implementations of the one or more implementations of this specification, and are not intended to limit the one or more implementations of this specification. A person skilled in the art knows that one or more implementations of this specification can have various modifications and changes. Any modifications, equivalent replacements, improvements, etc. made without departing from the spirit and principle of this specification shall fall within the scope of the claims.

## Claims

1. A method based on a blockchain system, wherein a certificate authority (CA) contract and a signature contract are deployed in the blockchain system, the CA contract comprises a call to the signature contract, a signature public key and information about parameters n and t are stored in association with an account of the CA contract in a contract state of the signature contract, and the signature public key is generated by devices of n service providers by using a distributed key protocol; and the method comprises:
receiving, by the blockchain system, a first transaction calling the CA contract, wherein the first transaction comprises a user certificate issuance request;
providing, by the blockchain system, a digest of user certificate content corresponding to the user certificate issuance request for the signature contract; and
instructing, by the blockchain system based on the signature contract, at least t+1 service providers in the n service providers to generate a signature corresponding to the signature public key;
performing, by devices of the at least t+1 service providers, distributed threshold signing, wherein a device of any one of the at least t+1 service providers generates a first signature on the user certificate content; and sends a second transaction calling the signature contract to the blockchain system, wherein the second transaction comprises a contract account of the CA contract and the first signature; and
returning, by the blockchain system, the first signature to the CA contract based on the second transaction; and
issuing, by the blockchain system, a user certificate based on the first signature by executing the CA contract.

2. The method according to claim 1, wherein the CA contract comprises a certificate approval logic, and the providing, by the blockchain system, the digest of the user certificate content corresponding to the user certificate issuance request for the signature contract comprises:
reviewing, by the blockchain system, the user certificate based on the certificate approval logic; and
providing, by the blockchain system, the digest of the user certificate content corresponding to the user certificate issuance request for the signature contract after the user certificate is approved.

3. The method according to claim 2, wherein several CA administrator accounts are stored in the contract state of the CA contract, and the reviewing, by the blockchain system, the user certificate based on the certificate approval logic comprises:
executing, by the blockchain system, the first transaction to separately send the user certificate issuance request to several CA administrator devices, wherein the several CA administrator devices respectively correspond to the several CA administrator accounts;
the method further comprises: sending, by the several CA administrator devices to the blockchain system, a third transaction calling the CA contract, wherein the third transaction comprises an approval result of the user certificate issuance request; and
the providing the digest of the user certificate content corresponding to the user certificate issuance request for the signature contract comprises:
providing, by the blockchain system, the digest of the user certificate content corresponding to the user certificate issuance request for the signature contract based on the call to the signature contract in the CA contract in response to determining, based on several third transactions, that the user certificate issuance request is approved.

4. The method according to claim 1, further comprising:
receiving, by the blockchain system, a fourth transaction calling the signature contract, wherein the fourth transaction is used to request to generate a distributed key corresponding to a first account, the first account is an externally owned account, and the first transaction comprises the information about the parameters n and t; associatively storing, by the blockchain system, the first account and the information about the parameters n and t in the contract state of the signature contract based on the first transaction, and instructing the n service providers to enter a key generation phase;
generating, by the devices of the n service providers, respective first private key shards and signature public keys based on a distributed key generation protocol, and sending a fifth transaction calling the signature contract to the blockchain system; and
storing, by the blockchain system, the signature public key in association with the first account in the contract state of the signature contract based on the fifth transaction.

5. The method according to claim 4, wherein the method further comprises:
receiving, by the blockchain system, a sixth transaction calling the signature contract, wherein the sixth transaction is sent by the first account and is used to request to generate a signature on CA contract certificate content; and instructing, by the blockchain system based on the sixth transaction, the at least t+1 service providers in the n service providers to sign; and
performing, by the devices of the at least t+1 service providers, distributed threshold signing, wherein any one of the devices of the at least t+1 service providers generates a second signature on the CA contract certificate content, and returns the second signature to the blockchain system, wherein the second signature is generated based on a digest of the CA contract certificate content and the first private key shard of each of the at least t+1 service providers; and
pushing, by the blockchain system, the second signature to a device of a first administrator corresponding to the first account.

6. The method according to claim 5, after the storing, by the blockchain system, the signature public key in association with the first account in the contract state of the signature contract based on the fifth transaction, further comprising:
instructing, by the blockchain system, the at least t+1 service providers in the n service providers to perform a preprocessing process; and
generating, by a device of each of the at least t+1 service providers in the n service providers, a first random number and a second random number, calculating intermediate data based on the first random number and the second random number, and updating the first private key shard to obtain a second private key shard, wherein
the second signature is generated based on the digest of the CA contract certificate content, the intermediate data of each of the at least t+1 service providers, the second private key shard, and the first random number.

7. The method according to claim 6, wherein the performing, by the devices of the at least t+1 service providers, distributed threshold signing comprises:
generating, by the device of each of the at least t+1 service providers, a first signature component corresponding to the first account based on the intermediate data of the service provider; generating a signature shard of the service provider based on the intermediate data of the service provider, the second private key shard, the first random number, the digest of the CA contract certificate content, and the first signature component; and
sending, by the device of each of the at least t+1 service providers, the signature shard of the device of each of the at least t+1 service providers to devices of the other service providers in the at least t+1 service providers by sending a transaction calling the signature contract to the blockchain system; and
generating, by the device of any one of the at least t+1 service providers, a second signature component corresponding to the first account based on at least t+1 signature shards after the device has collected the signature shard of each of the at least t+1 service providers.

8. The method according to claim 6, wherein the fifth transaction further comprises a value of k, n>k>t, and the calculating, by each of the at least t+1 service providers in the n service providers, the intermediate data based on the first random number and the second random number comprises:
generating, by devices of several service providers in the n service providers, a homomorphic ciphertext of the first random number and a random number public key of the second random number, and sending a seventh transaction calling the signature contract to the blockchain system, wherein the seventh transaction comprises the homomorphic ciphertext of the first random number and the random number public key of the second random number;
pushing, by the blockchain system, the first account, and the homomorphic ciphertext of the first random number and the random number public key of the second random number of each service provider to the other service providers based on the seventh transaction;
instructing, by the blockchain system, at least k service providers sending the seventh transaction to continue the preprocessing process in response to determining that a quantity of received seventh transactions is greater than or equal to k; and
selecting, by a device of each of the at least k service providers, a first mask for each of the other service providers, generating a first intermediate ciphertext for each of the other service providers based on a second random number of the device, homomorphic ciphertexts of first random numbers of the other service providers, and a homomorphic ciphertext corresponding to each first mask, sending a transaction calling the signature contract to the blockchain system, and sending the first intermediate ciphertext to a corresponding another service provider through the blockchain system; and decrypting at least k-1 received first intermediate ciphertexts of at least k-1 other service providers to obtain at least k-1 first intermediate plaintexts.

9. The method according to claim 6, wherein the updating the first private key shard to obtain the second private key shard comprises:
updating, by the device of each of the at least t+1 service providers in the n service providers, the first private key shard based on a Lagrange coefficient to obtain the second private key shard.

10. The method according to claim 6, further comprising:
receiving, by the blockchain system, an eighth transaction for deploying the CA contract, wherein the eighth transaction is sent by the first account, and comprises a certificate of the CA contract, accounts of several CA administrators, and an account of the signature contract; and verifying whether the first account is an account of the first administrator, deploying the CA contract in response to that the verification succeeds, and storing the certificate of the CA contract, the accounts of the several CA administrators, and the account of the signature contract in the contract state of the CA contract, wherein the certificate of the CA contract comprises the CA contract certificate content and the second signature.

11. The method according to claim 10, further comprising:
receiving, by the blockchain system, a ninth transaction calling the signature contract, wherein the ninth transaction is sent by the first account and is used to transfer a key corresponding to the first account to the contract account of the CA contract; and
updating the contract state of the signature contract with associative storage of the signature public key and the contract account of the CA contract based on the ninth transaction.

12. The method according to claim 1, further comprising:
determining, by the blockchain system based on the first transaction, whether a signature public key corresponding to the account of the CA contract is stored in the contract state of the signature contract, and ending execution of the first transaction when the signature public key corresponding to the account of the CA contract is not stored in the contract state.

13. The method according to claim 1, wherein the user certificate content comprises a certificate effective time, and the certificate effective time is a time corresponding to a current block.

14. The method according to claim 1, wherein the user certificate content comprises a certificate serial number determined by the CA contract.

15. The method according to claim 14, wherein a revocation list is stored in the contract state of the CA contract, and the method further comprises:
receiving, by the blockchain system, a tenth transaction from each of several CA administrator devices, wherein the tenth transaction comprises a first serial number of a to-be-revoked first certificate; and
adding the first serial number to the revocation list when determining to revoke the first certificate based on the tenth transaction.

16. The method according to claim 1, further comprising:
receiving, by the blockchain system, an eleventh transaction for deploying the CA contract, wherein the eleventh transaction comprises CA contract certificate content of the CA contract, the call to the signature contract, and the information about the parameters n and t; and
verifying whether a sender of the eleventh transaction is a first administrator account, providing a digest of the CA contract certificate content, the information about the parameters n and t, and the contract account of the CA contract for the signature contract in response to that the verification succeeds, associatively storing an account of the CA contract, the digest of the CA contract certificate content, and the information about the parameters n and t in the contract state of the signature contract, and instructing the n service providers to enter a key generation phase;
generating, by each of the devices of the n service providers, a first private key shard and a signature public key of the device based on a distributed key generation protocol, and sending a twelfth transaction calling the signature contract to the blockchain system;
storing, by the blockchain system, the signature public key in association with the account of the CA contract in the contract state of the signature contract based on the twelfth transaction, and instructing the at least t+1 service providers in the n service providers to sign the CA contract certificate content;
performing, by the devices of the at least t+1 service providers, distributed threshold signing, wherein the device of any one of the at least t+1 service providers generates a third signature on the CA contract certificate content, and returns the third signature to the blockchain system, wherein the third signature is generated based on the digest of the CA contract certificate content and the first private key shard of each of the at least t+1 service providers; and
returning, by the blockchain system, the third signature to the CA contract, and storing a certificate of the CA contract in the contract state of the CA contract, wherein the certificate of the CA contract comprises the CA contract certificate content and the third signature.

17. The method according to claim 1, wherein the returning, by the blockchain system, the first signature to the CA contract based on the second transaction comprises:
verifying, by the blockchain system, the first signature based on the second transaction by using the signature public key, and returning the first signature to the CA contract if the verification succeeds.

18. A method performed by a node in a blockchain system, wherein a CA contract and a signature contract are deployed in the blockchain system, the CA contract comprises a call to the signature contract, a signature public key and information about parameters n and t are stored in association with an account of the CA contract in a contract state of the signature contract, and the signature public key is generated by n service providers by using a distributed key protocol; and the method comprises:
receiving a first transaction calling the CA contract, wherein the first transaction comprises a user certificate issuance request;
providing a digest of user certificate content corresponding to the user certificate issuance request for the signature contract;
instructing, based on the signature contract, at least t+1 service providers in the n service providers to generate a first signature on the user certificate content based on a private key shard corresponding to the signature public key;
receiving a second transaction calling the signature contract from a device of any one of the at least t+1 service providers, wherein the second transaction comprises a contract account of the CA contract and the first signature;
returning the first signature to the CA contract based on the second transaction; and
issuing a user certificate based on the first signature by executing the CA contract.

19. A system, comprising a blockchain system and multiple service provider devices, wherein:
a CA contract and a signature contract are deployed in the blockchain system, the CA contract comprises a call to the signature contract, a signature public key and information about parameters n and t are stored in association with an account of the CA contract in a contract state of the signature contract, and the signature public key is generated by n service providers by using a distributed key protocol;
the blockchain system is configured to:
receive a first transaction calling the CA contract, wherein the first transaction comprises a user certificate issuance request;
provide a digest of user certificate content corresponding to the user certificate issuance request for the signature contract; and
instruct, based on the signature contract, service provider devices of at least t+1 service providers in the n service providers to generate a signature corresponding to the signature public key;
the devices of the at least t+1 service providers are configured to:
perform distributed threshold signing, wherein a device of any one of the at least t+1 service providers generates a first signature on the user certificate content; and sends a second transaction calling the signature contract to the blockchain system, wherein the second transaction comprises a contract account of the CA contract and the first signature; and
the blockchain system is further configured to return the first signature to the CA contract based on the second transaction, and issue a user certificate based on the first signature by executing the CA contract.

20. A node of a blockchain system, wherein a CA contract and a signature contract are deployed in the blockchain system, the CA contract comprises a call to the signature contract, a signature public key and information about parameters n and t are stored in association with an account of the CA contract in a contract state of the signature contract, and the signature public key is generated by n service providers by using a distributed key protocol; and the node comprises:
at least one processor; and
at least one storage that stores processor-executable instructions executable by the at least one processor to implement operations comprising:
receiving a first transaction calling the CA contract, wherein the first transaction comprises a user certificate issuance request;
providing a digest of user certificate content corresponding to the user certificate issuance request for the signature contract;
instructing, based on the signature contract, at least t+1 service providers in the n service providers to generate a first signature on the user certificate content based on a private key shard corresponding to the signature public key;
receiving a second transaction calling the signature contract from a device of any one of the at least t+1 service providers, wherein the second transaction comprises a contract account of the CA contract and the first signature;
returning the first signature to the CA contract based on the second transaction; and
issuing a user certificate based on the first signature by executing the CA contract.
